# EUROPEAN PATENT SPECIFICATION

(11) **EP 3 272 916 B1**
(45) Date of publication and mention of the grant of the patent: **07.10.2020**
(21) Application number: 17182255.4
(22) Date of filing: 20.07.2017
(51) Int. Cl.: D01F 1/02, D01D 5/253, D06P 1/00, D06P 1/44, D06M 23/08, D06M 23/16

(54) **MULTI-LOBED FIBER**
MULTILOBALE FASER
FIBRE MULTILOBÉE

(30) Priority: 22.07.2016 US 201662365832 P
(43) Date of publication of application: 24.01.2018
(73) Proprietor: Suntex Fiber Co., Ltd., Homei Changhwa (TW)
(72) Inventor: PAI, Hung Yu, Homei Changhwa (TW)
(74) Representative: Casalonga

(56) References cited:
- EP-A2- 0 860 521
- US-A- 5 759 394
- US-A1- 2004 109 999

## Description

This application claims priority of U.S. provisional application Ser. No. 62/365,832 filed on 22 July 2016.

### TECHNICAL FIELD

The present disclosure relates to a multi-lobed fiber.

### DISCUSSION OF THE BACKGROUND

Textile with multi-lobed fiber is advantageous for its relatively high light covering and low air permeability. However, there is a need to provide fibers with other functions such as "glow in the dark," reflection or retro-reflection.

This Discussion of the Background section is provided for background information only. The statements in this Discussion of the Background are not an admission that the subject matter disclosed in this section constitutes prior art to the present disclosure, and no part of this Discussion of the Background section may be used as an admission that any part of this application, including this Discussion of the Background section, constitutes prior art to the present disclosure.

US 2004/0109999 A1 discloses a functional composite fiber comprising a plurality of T-lobes connected with each other at their bases, wherein the caps of the T-lobes contain a component, and their bases T-lobes contain the component and an additive. The additive is not exposed on the surface of the fiber thereby preventing post-manufacturing abrasion of the spinning machine.

### SUMMARY

The present invention provides a multi-lobed fiber.

A multi-lobed fiber according to the present invention includes a fiber and additives. The fiber has a cross-section including a core portion and a plurality of lobes. Each of the lobes includes an inner end connected to the core portion, and an outer end protruding from the core portion. The additives are substantially disposed in the fiber. Each of the additives includes an outer point distal to the core portion, and the outer points of the additives are closer to the core portion than the outer ends of the lobes. The plurality of lobes are arranged radially with respect to the core portion. A portion of at least some of the additives is disposed in the core portion, the other portion of at least some of the additives protrudes from the core portion.

In some embodiments, the additives are disposed between two respective lobes of the plurality of lobes, and closer to the core portion than an imaginary connecting line extending between the outer ends of the two respective lobes of the plurality of lobes.

In some embodiments, a number of the lobes is between 3 and 12.

In some embodiments, the core portion and the lobes are formed from a same material.

In some embodiments, the core portion and the lobes are formed from different materials.

In some embodiments, the multi-lobed fiber further includes an adhesive layer covering the core portion, and the additives are adhered to the core portion of the fiber by the adhesive layer.

In some embodiments, a portion of at least some of the additives protrudes from the adhesive layer.

The core portion and the plurality of lobes extend along an axial direction, and the outer ends of the plurality of lobes are disconnected from one another.

In some embodiments, the core portion and the plurality of lobes are integrally formed.

In some embodiments, the additives include coloring additives, phosphorescent additives, reflecting additives, abrasive additives, fragile additives, or combinations thereof.

In some embodiments, the core portion of the fiber has a substantially circular shape.

In some embodiments, the core portion of the fiber has a polygonal shape.

The multi-lobed fiber of the present disclosure includes additives closer to the core portion of the fiber than the outer ends of the lobes. Consequently, the outer end of the lobe reduces the possibility of contact between machine parts of a weaving machine or a knitting machine and the additives during subsequent weaving or knitting process. Furthermore, the lobes protruding out from the core portion can even prevent the additives from directly contacting or rubbing machine parts of a weaving machine or a knitting machine. Accordingly, possible damage to the machine parts caused by the additives can be avoided. Furthermore, the protruding outer end of the lobe protects the additives from breaking or falling apart.

The foregoing has outlined rather broadly the features and technical advantages of the present disclosure in order that the detailed description of the disclosure that follows may be better understood. Additional features and advantages of the disclosure will be described hereinafter, and form the subject of the claims of the disclosure. It should be appreciated by those skilled in the art that the conception and specific embodiment disclosed may be readily utilized as a basis for modifying or designing other structures or processes for carrying out the same purposes as those of the present disclosure, as long as they fall within the present invention as set forth in the appended claims.

### BRIEF DESCRIPTION OF THE DRAWINGS

A more complete understanding of the present disclosure may be derived by referring to the detailed description and claims when considered in connection with the Figures, where like reference numbers refer to similar elements throughout the Figures, and:
FIG. 1 is a full view of a fiber according to some embodiments of the present disclosure;
FIG. 1A is a cross-sectional view of a multi-lobed fiber according to some embodiments of the present disclosure;
FIG. 1B is a cross-sectional view of a multi-lobed fiber according to some embodiments of the present disclosure;
FIG. 2A is a cross-sectional view of a multi-lobed fiber according to some embodiments of the present disclosure;
FIG. 2B is a cross-sectional view of a multi-lobed fiber according to some embodiments of the present disclosure;
FIG. 3A is a cross-sectional view of a multi-lobed fiber according to some embodiments of the present disclosure;
FIG. 3B is a cross-sectional view of a multi-lobed fiber according to some embodiments of the present disclosure;
FIG. 4A is a cross-sectional view of a multi-lobed fiber according to some embodiments of the present disclosure;
FIG. 4B is a cross-sectional view of a multi-lobed fiber according to some embodiments of the present disclosure;
FIG. 5A is a cross-sectional view of a multi-lobed fiber according to some embodiments of the present disclosure;
FIG. 5B is a cross-sectional view of a multi-lobed fiber according to some embodiments of the present disclosure;
FIG. 6A is a cross-sectional view of a multi-lobed fiber according to some embodiments of the present disclosure;
FIG. 6B is a cross-sectional view of a multi-lobed fiber according to some embodiments of the present disclosure;
FIG. 7A is a cross-sectional view of a multi-lobed fiber according to some embodiments of the present disclosure;
FIG. 7B is a cross-sectional view of a multi-lobed fiber according to some embodiments of the present disclosure;
FIG. 8A is a cross-sectional view of a multi-lobed fiber according to some embodiments of the present disclosure;
FIG. 8B is a cross-sectional view of a multi-lobed fiber according to some embodiments of the present disclosure;
FIG. 9A is a cross-sectional view of a multi-lobed fiber according to some embodiments of the present disclosure;
FIG. 9B is a cross-sectional view of a multi-lobed fiber according to some embodiments of the present disclosure;
FIG. 10A is a cross-sectional view of a multi-lobed fiber according to some embodiments of the present disclosure;
FIG. 10B is a cross-sectional view of a multi-lobed fiber according to some embodiments of the present disclosure;
FIG. 11A is a cross-sectional view of a multi-lobed fiber according to some embodiments of the present disclosure;
FIG. 11B is a cross-sectional view of a multi-lobed fiber according to some embodiments of the present disclosure;
FIG. 12A is a cross-sectional view of a multi-lobed fiber according to some embodiments of the present disclosure;
FIG. 12B is a cross-sectional view of a multi-lobed fiber according to some embodiments of the present disclosure;
FIG. 13A is a cross-sectional view of a multi-lobed fiber according to some embodiments of the present disclosure;
FIG. 13B is a cross-sectional view of a multi-lobed fiber according to some embodiments of the present disclosure;
FIG. 14A is a cross-sectional view of a multi-lobed fiber according to some embodiments of the present disclosure;
FIG. 14B is a cross-sectional view of a multi-lobed fiber according to some embodiments of the present disclosure;
FIG. 15A is a cross-sectional view of a multi-lobed fiber according to some embodiments of the present disclosure;
FIG. 15B is a cross-sectional view of a multi-lobed fiber according to some embodiments of the present disclosure;
FIG. 16A is a cross-sectional view of a multi-lobed fiber according to some embodiments of the present disclosure;
FIG. 16B is a cross-sectional view of a multi-lobed fiber according to some embodiments of the present disclosure;
FIG. 17A is a cross-sectional view of a multi-lobed fiber according to some embodiments of the present disclosure;
FIG. 17B is a cross-sectional view of a multi-lobed fiber according to some embodiments of the present disclosure;
FIG. 18A is a cross-sectional view of a multi-lobed fiber according to some embodiments of the present disclosure;
FIG. 18B is a cross-sectional view of a multi-lobed fiber according to some embodiments of the present disclosure;
FIG. 19A is a schematic view of a spinneret assembly for manufacturing a multi-lobed fiber according to some embodiments of the present disclosure;
FIG. 19B is a cross-sectional view of a spinneret assembly for manufacturing a multi-lobed fiber along a line B-B according to some embodiments of the present disclosure;
FIG. 20 is a flow chart illustrating a method of manufacturing a multi-lobed fiber according to various aspects of one or more embodiments of the present disclosure;
FIG. 21 is a photo showing a multi-lobed fiber according to one embodiment of the present disclosure; and
FIG. 22 is a photo showing a multi-lobed fiber according to one embodiment of the present disclosure.

### DETAILED DESCRIPTION

The following description of the disclosure accompanies drawings, which are incorporated in and constitute a multi-lobed fiber, a spinneret assembly and a method for manufacturing a multi-lobed fiber of this specification, and illustrate embodiments of the disclosure, but the disclosure is not limited to the embodiments. In addition, the following embodiments can be properly integrated to complete another embodiment.

References to "one embodiment," "an embodiment," "exemplary embodiment," "some embodiments," "other embodiments," "another embodiment," etc. indicate that the embodiment(s) of the disclosure so described may include a particular feature, structure, or characteristic, but not every embodiment necessarily includes the particular feature, structure, or characteristic. Further, repeated use of the phrase "in the embodiment" does not necessarily refer to the same embodiment, although it may.

In order to make the present disclosure completely comprehensible, detailed steps and structures are provided in the following description. Obviously, implementation of the present disclosure does not limit special details known by persons skilled in the art. In addition, known structures and steps are not described in detail, so as not to limit the present disclosure unnecessarily. Preferred embodiments of the present disclosure will be described below in detail. However, in addition to the detailed description, the present disclosure may also be widely implemented in other embodiments. The scope of the present invention is not limited to the detailed description, and is defined by the claims.

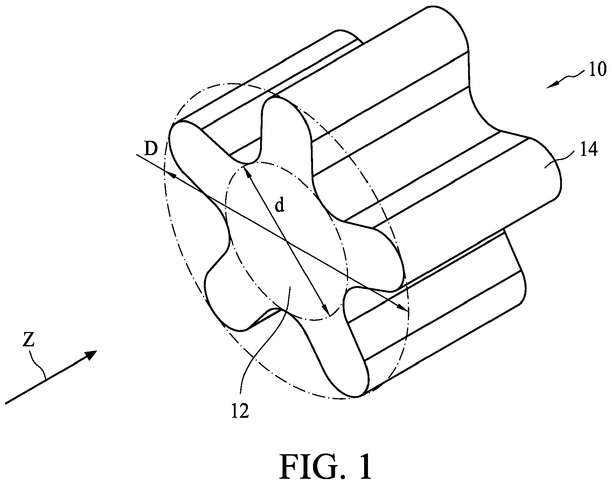

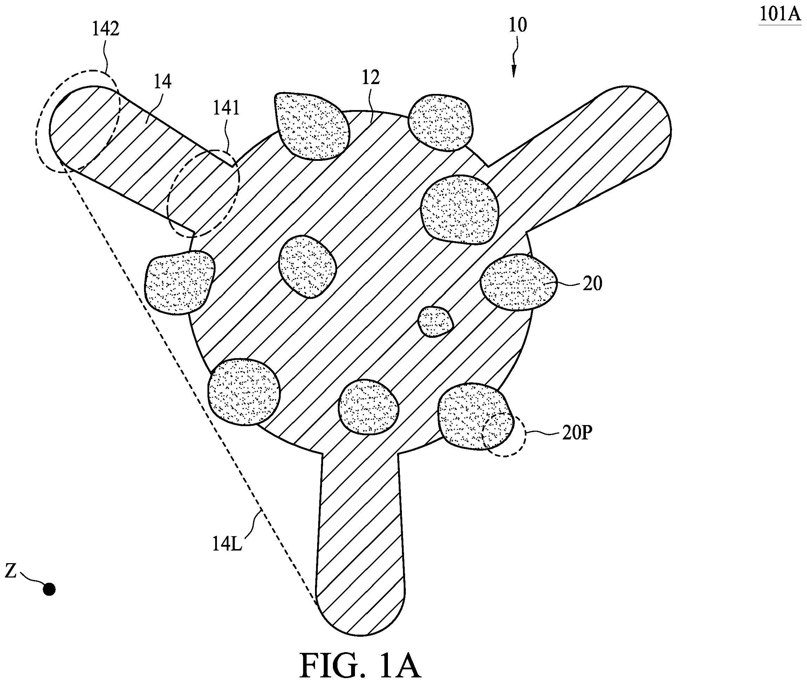

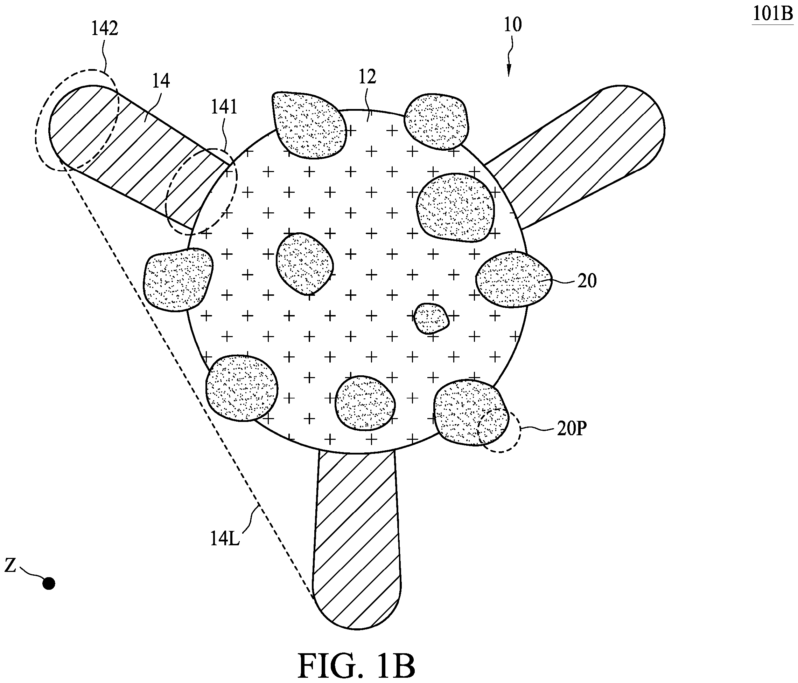

FIG. 1 is a full view of the fiber according to some embodiments of the present disclosure. In some embodiments, the fiber 10 has a fineness between 0.5 dtex and 600 dtex. In some embodiments, the fiber 10 has a fineness of 1.1 dtex. In some embodiments, the length of the major axis (the longest diameter, D) and the length of the minor axis (the shortest diameter, d) of the cross-section of the fiber 10 can be measured at predetermined magnifications when using a microscope, and the ratio of the longest diameter (D) of the major axis to the shortest diameter (d) of the minor axis of the cross-section of the fiber can then be calculated. In some embodiments, the average of the ratios of several fibers is defined as the degree of modification (also referred to as "M ratio"). In some embodiments, when the core portion 12 has a circular shape, the fiber 10 has a degree of modification between 1.2 and 3.0, and preferably the fiber 10 has a modification between 1.4 and 2.2. As shown in FIG. 1, the core portion 12 and the lobes 14 extend along an axial direction Z, and the outer ends 142 of the lobes 14 are disconnected from one another.

FIG. 1A is a cross-sectional view of a multi-lobed fiber according to some embodiments of the present disclosure. As shown in FIG. 1A, the multi-lobed fiber 101A includes a fiber 10 and additives 20. The fiber 10 has a cross-section having a core portion 12 and lobes 14. Each of the lobes 14 includes an inner end 141 connected to the core portion 12, and an outer end 142 protruding from the core portion 12. The additives 20 are substantially disposed in the fiber 10. Each of the additives 20 includes an outer point 20P distal to the core portion 12, and the outer point 20P of each of the additives 20 is closer to the core portion 12 than the outer end 142 of each of the lobes 14. In other words, at least some of the additives 20 or all of the additives 20 are disposed between two respective lobes 14, and closer to the core portion 12 than an imaginary connecting line 14L extending between the outer ends 142 of the two respective lobes 14.

In some embodiments, the core portion 12 of the fiber 10 has a substantially circular shape, but is not limited thereto. In some embodiments, the lobe 14 of the fiber 10 has a substantially rectangular shape with a rounded end, but is not limited thereto. The lobes 14 are arranged radially with respect to the core portion 12. In some embodiments, the core portion 12 and the lobes 14 extend along an axial direction Z substantially perpendicular to the cross-sectional direction, and the outer ends 142 of the lobes 14 are disconnected from one another. In some embodiments, the number of the lobes 14 may be between 3 and 12, but the number of lobes is not limited thereto.

In some embodiments, the core portion 12 and the lobes 14 are formed from the same material. By way of examples, the material of the core portion 12 and the lobes 14 may include polyamide, polyester or other suitable material. In some embodiments, the core portion 12 and the lobes 14 may have the same color or different colors. In some embodiments, the lobes 14 may be further divided into two or more groups, and these groups of the lobes 14 may have different colors. In some embodiments, the color(s) of the core portion 12 and the lobes 14 may be provided by adding pigment(s) in the core material (material for manufacturing the core portion 12) and/or lobe material (material for manufacturing the lobe 14) before the core portion 12 and the lobes 14 are formed. In some embodiments, the core portion 12 and the lobes 14 may be colored by performing a coloring process after the core portion 12 and the lobes 14 are formed. In some embodiments, different colors can be formed on the core portion 12 and the lobes 14 using their different chemical characteristics. In some embodiments, three lobes 14 are connected to the core portion 12, but the disclosure is not limited thereto.

In some embodiments, the lobes 14 may be divided into at least two groups made of different materials. By way of examples, one group of the lobes 14 may be made of polyamide or polyester, and the other group of the lobes 14 may be made of polyamide elastomer or polyester elastomer, respectively. In some embodiments of the present disclosure, the different materials have different shrinkages to implement a crimping effect on the multi-lobed fiber 101.

The additives 20 are disposed in the core portion 12 of the fiber 10, and a portion of at least some of the additives 20 protrudes from the core portion 12 of the fiber 10. The additives 20 are configured to provide one or more desired functions. By way of examples, the additives 20 may include coloring additives, phosphorescent additives, reflecting additives, abrasive additives, fragile additives, or combinations thereof. In some embodiments, the additives 20 may include coloring additives having the same color as the fiber 10 or having different colors from the fiber 10. In some embodiments, the additives 20 may include reflecting additives such as metal beads for providing light reflection effect, or glass beads for providing light retro-reflection effect. In some embodiments, the additives 20 may include phosphorescent additives such as zinc sulfide or strontium aluminate particles for providing phosphorescent effect (i.e., glow-in-the-dark effect).

In some embodiments, the additives 20 may include abrasive additives. In some embodiments, the lobes 14 protruding out from the core portion 12 reduces the possibility of contact between machine parts of a weaving machine or a knitting machine and the additives 20 during subsequent weaving or knitting process. In some embodiments, the protruding outer end 142 of the lobe 14 may even prevent the additives 20 from directly contacting or rubbing machine parts of a weaving machine or a knitting machine during subsequent weaving or knitting process, and thus can avoid possible damage to the machine parts caused by the additives 20. In some embodiments, the additives 20 may include fragile additives, and the protruding outer end 142 of the lobe 14 protects the additives 20 from breaking or falling apart.

FIG. 1B is a cross-sectional view of a multi-lobed fiber according to some embodiments of the present disclosure. As shown in FIG. 1B, the core portion 12 and the lobes 14 of the multi-lobed fiber 101B are formed from different materials. In some embodiments, the core portion 12 and the lobes 14 may be formed from different types of polyamide (PA) materials. By way of examples, the core portion 12 may be formed from one of PA 6, PA6 (CD), PA 66, PA 66 (CD), PA 610, PA 11, PA 12, PA copolymer and PA elastomer, and the lobes 14 may be formed form a different one of PA 6, PA6 (CD), PA 66, PA 66 (CD), PA 610, PA 11, PA 12, PA copolymer and PA elastomer. In some embodiments, the core portion 12 may be formed from one of PET, PBT, PTT, PP and PE, and the lobes 14 may be formed form a different one of PET, PBT, PTT, PP and PE. In some embodiments, one of the core portion 12 and the lobes 14 may be formed from PA 6, PA6 (CD), PA 66, PA 66 (CD), PA 610, PA 11, PA 12, PA copolymer or PA elastomer, and the other one of the core portion 12 and the lobes 14 may be formed from PET, PBT, PTT, PP and PE. In some embodiments, at least one of the core portion 12 and the lobes 14 may be formed from thermoplastic elastomer such as TPU (thermoplastic polyurethanes).

The multi-lobed fiber of the present disclosure is not limited to the above-mentioned embodiments, and may have other different embodiments. To simplify the description, and for the convenience of comparison between each of the embodiments of the present disclosure, the identical components in each of the following embodiments are marked with identical numerals. In order to facilitate comparing differences between the embodiments, the following description will detail the dissimilarities among different embodiments and the identical features will not be redundantly described.

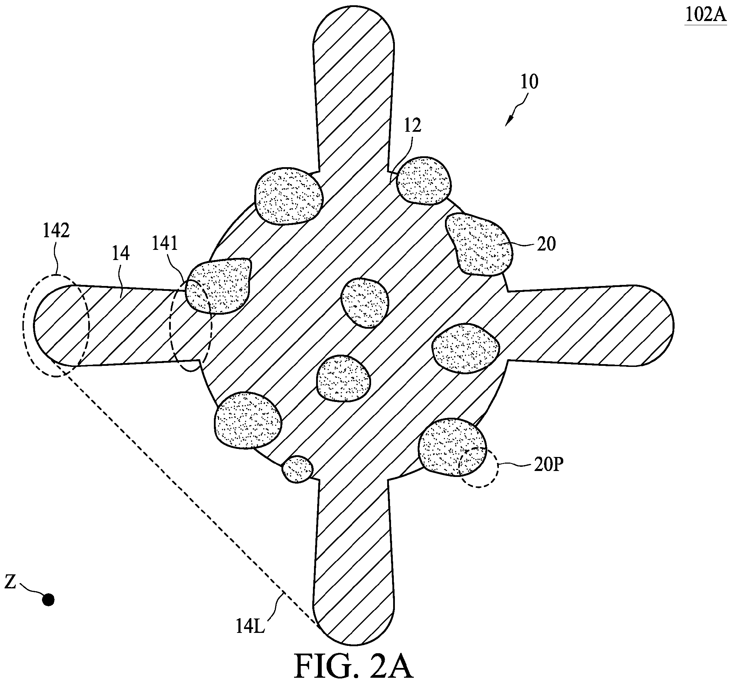

FIG. 2A is a cross-sectional view of a multi-lobed fiber according to some embodiments of the present disclosure. As shown in FIG. 2A, in contrast to the multi-lobed fiber 101A, the fiber 10 of the multi-lobed fiber 102A includes four lobes 14.

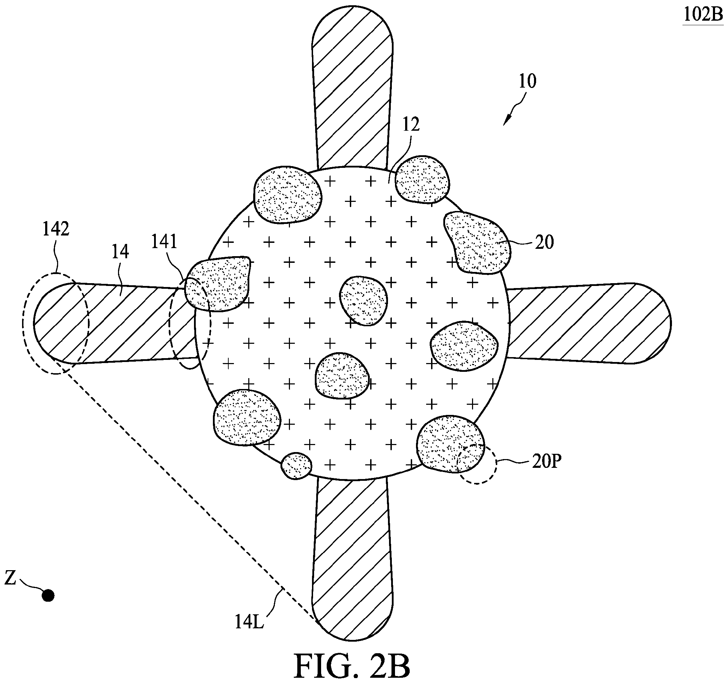

FIG. 2B is a cross-sectional view of a multi-lobed fiber according to some embodiments of the present disclosure. As shown in FIG. 2B, in contrast to the multi-lobed fiber 102A, the core portion 12 and the lobes 14 of the multi-lobed fiber 102B are formed from different materials.

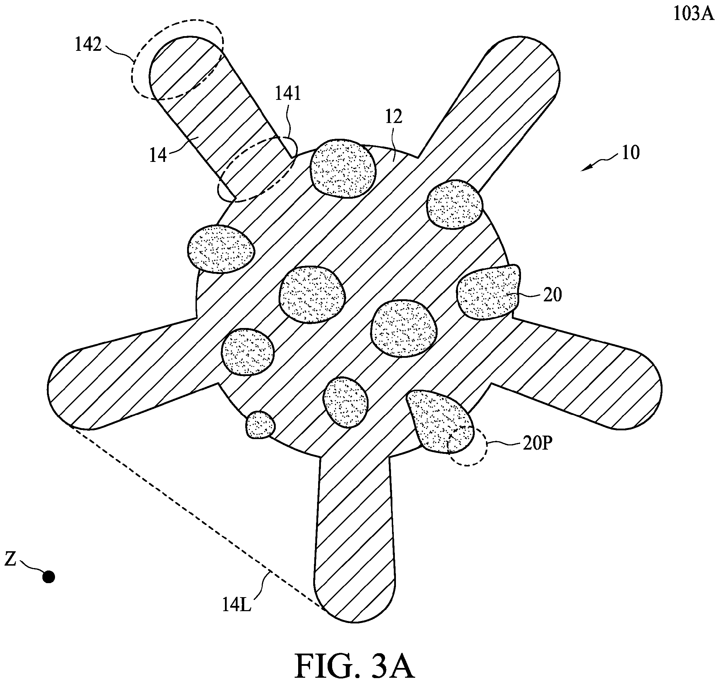

FIG. 3A is a cross-sectional view of a multi-lobed fiber according to some embodiments of the present disclosure. As shown in FIG. 3A, in contrast to the multi-lobed fiber 102A, the fiber 10 of the multi-lobed fiber 103A includes five lobes 14.

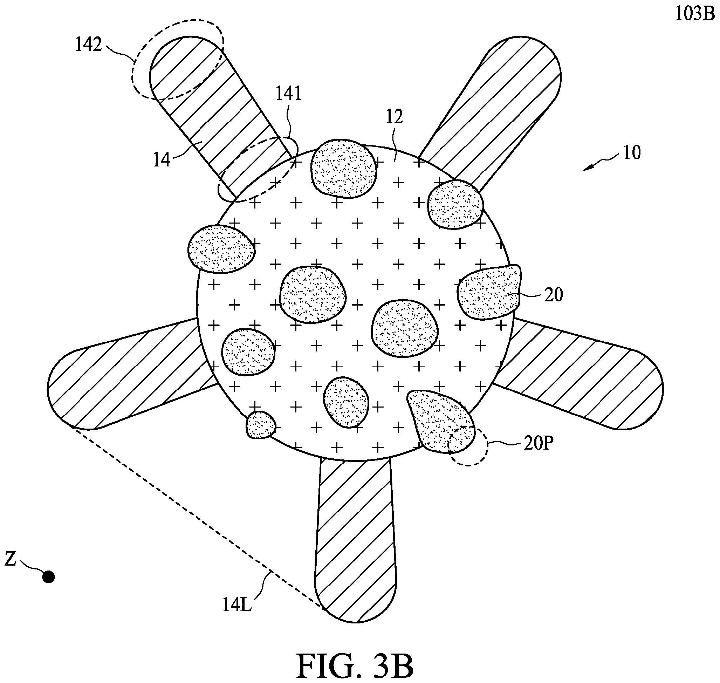

FIG. 3B is a cross-sectional view of a multi-lobed fiber according to some embodiments of the present disclosure. As shown in FIG. 3B, in contrast to the multi-lobed fiber 103A, the core portion 12 and the lobes 14 of the multi-lobed fiber 103B are formed from different materials.

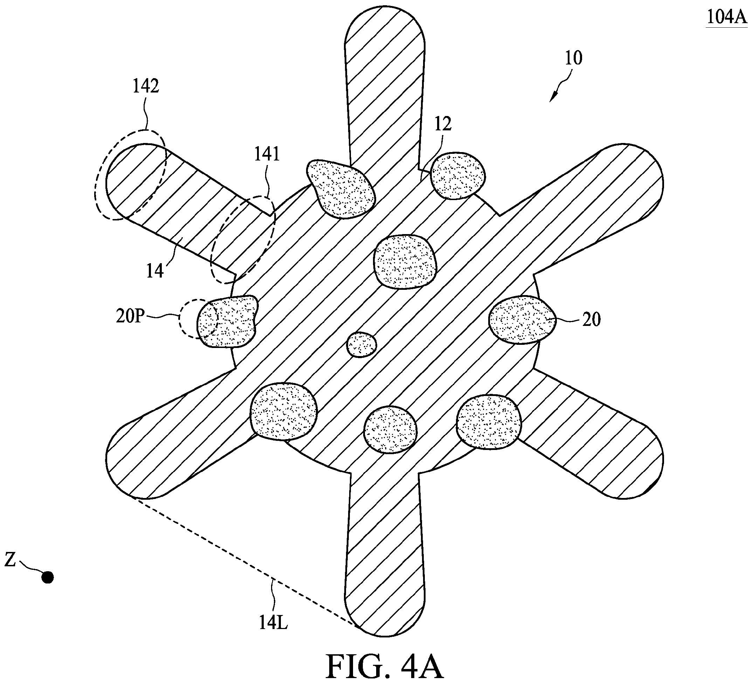

FIG. 4A is a cross-sectional view of a multi-lobed fiber according to some embodiments of the present disclosure. As shown in FIG. 4A, in contrast to the multi-lobed fiber 103A, the fiber 10 of the multi-lobed fiber 104A includes six lobes 14.

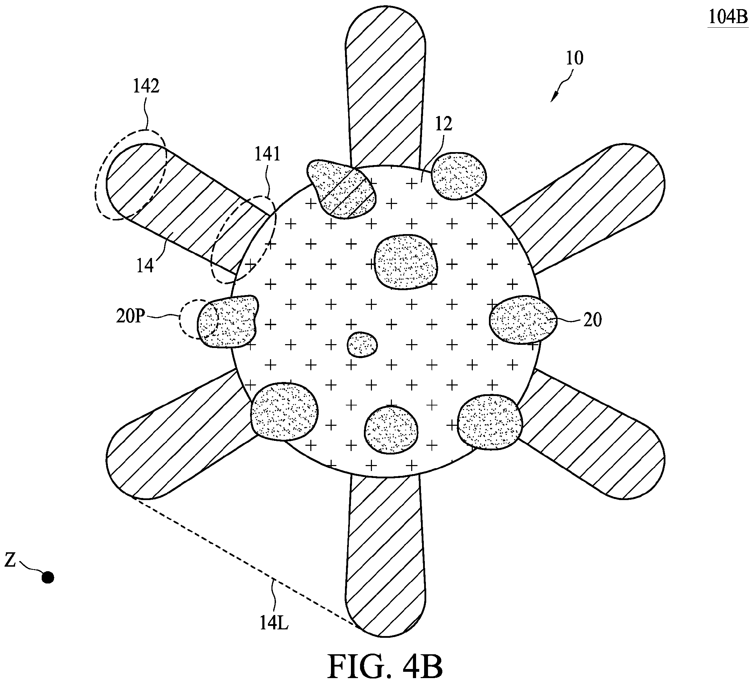

FIG. 4B is a cross-sectional view of a multi-lobed fiber according to some embodiments of the present disclosure. As shown in FIG. 4B, in contrast to the multi-lobed fiber 104A, the core portion 12 and the lobes 14 of the multi-lobed fiber 104B are formed from different materials.

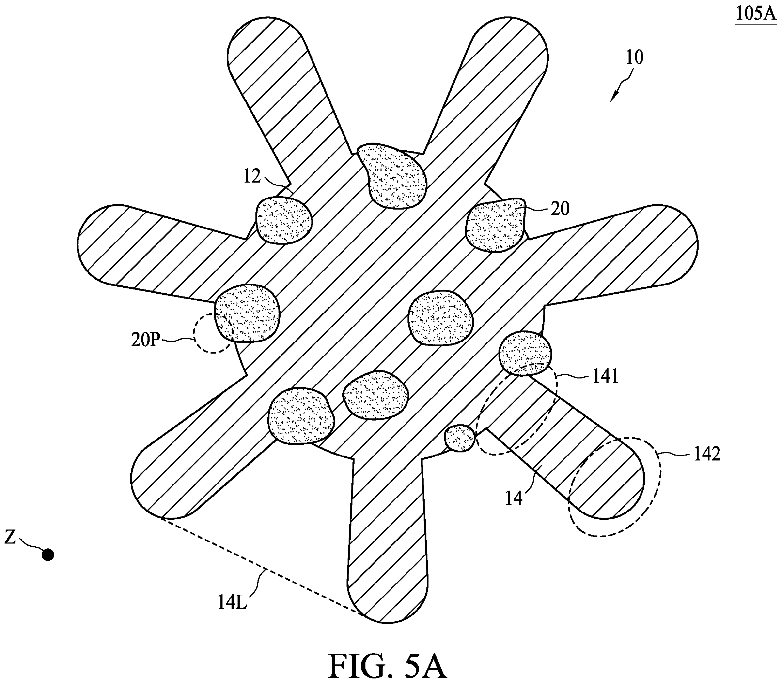

FIG. 5A is a cross-sectional view of a multi-lobed fiber according to some embodiments of the present disclosure. As shown in FIG. 5A, in contrast to the multi-lobed fiber 104A, the fiber 10 of the multi-lobed fiber 105A includes seven lobes 14.

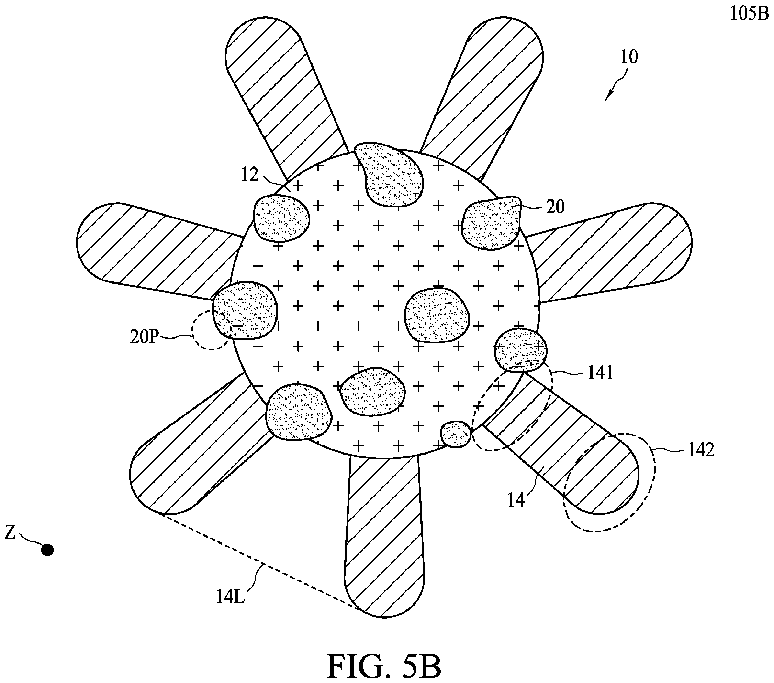

FIG. 5B is a cross-sectional view of a multi-lobed fiber according to some embodiments of the present disclosure. As shown in FIG. 5B, in contrast to the multi-lobed fiber 105A, the core portion 12 and the lobes 14 of the multi-lobed fiber 105B are formed from different materials.

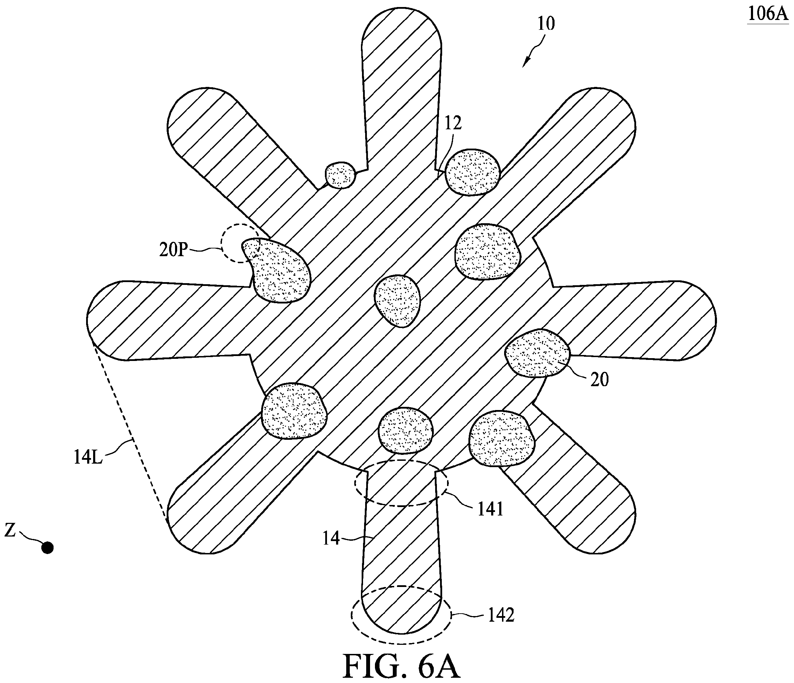

FIG. 6A is a cross-sectional view of a multi-lobed fiber according to some embodiments of the present disclosure. As shown in FIG. 6A, in contrast to the multi-lobed fiber 105A, the fiber 10 of the multi-lobed fiber 106A includes eight lobes 14.

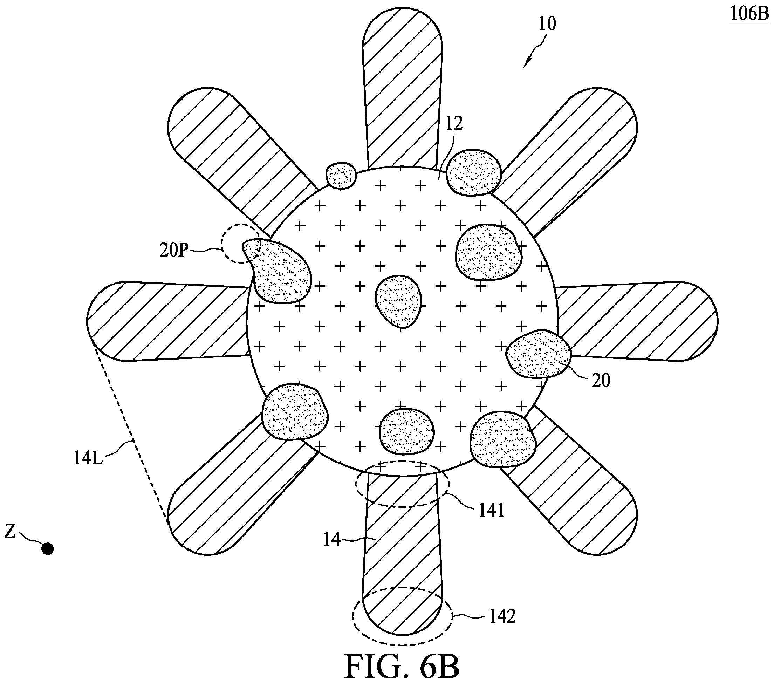

FIG. 6B is a cross-sectional view of a multi-lobed fiber according to some embodiments of the present disclosure. As shown in FIG. 6B, in contrast to the multi-lobed fiber 106A, the core portion 12 and the lobes 14 of the multi-lobed fiber 106B are formed from different materials.

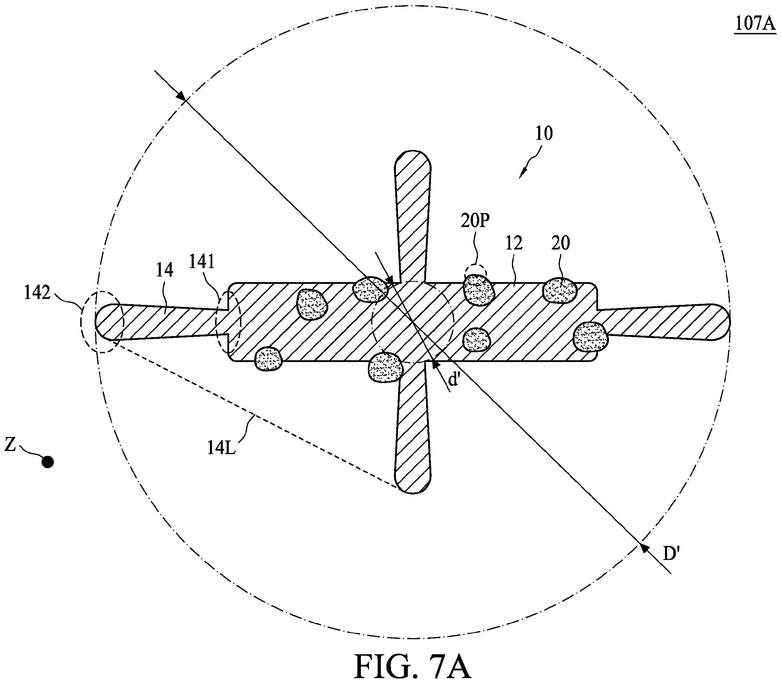

FIG. 7A is a cross-sectional view of a multi-lobed fiber according to some embodiments of the present disclosure. As shown in FIG. 7A, the core portion 12 of the fiber 10 of the multi-lobed fiber 107A has a polygonal shape such as a rectangular shape. The fiber 10 of the multi-lobed fiber 107A includes four lobes 14. The core portion 12 and the lobes 14 of the multi-lobed fiber 107A are formed from the same material. In some embodiments, the length of the major axis (the longest diameter, D') of the cross-section of two distal lobes 14 and the length of the minor axis (the shortest diameter, d') of the cross-section of the core portion 12 of the fiber 10 can be measured at predetermined magnifications when using a microscope, and the ratio of the longest diameter (D') of the major axis to the shortest diameter (d') of the minor axis of the cross-section of the fiber 10 can then be calculated. In some embodiments, the average of the ratios of several fibers is defined as the degree of modification. In some embodiments, when the core portion 12 has a polygonal shape such as a rectangular shape, the fiber 10 has a degree of modification between 2 and 12.

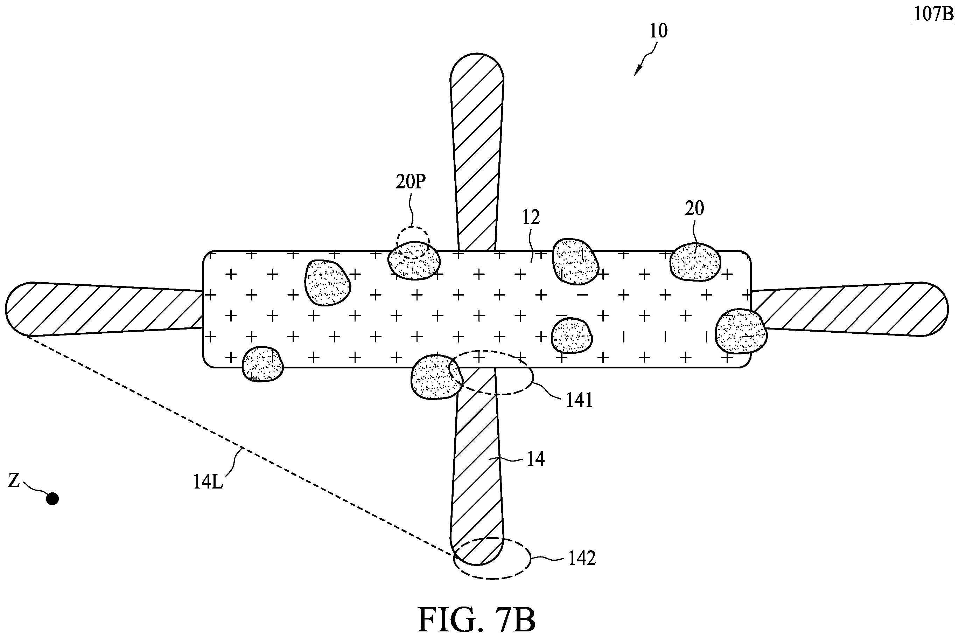

FIG. 7B is a cross-sectional view of a multi-lobed fiber according to some embodiments of the present disclosure. As shown in FIG. 7B, in contrast to the multi-lobed fiber 107A, the core portion 12 and the lobes 14 of the multi-lobed fiber 107B are formed from different materials.

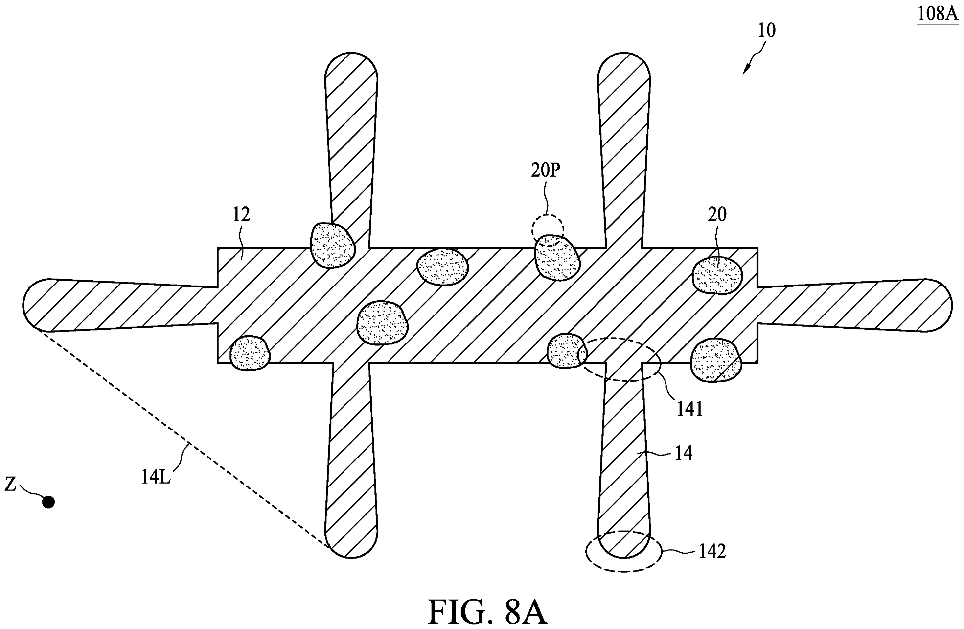

FIG. 8A is a cross-sectional view of a multi-lobed fiber according to some embodiments of the present disclosure. As shown in FIG. 8A, in contrast to the multi-lobed fiber 107A, the fiber 10 of the multi-lobed fiber 108A includes six lobes 14.

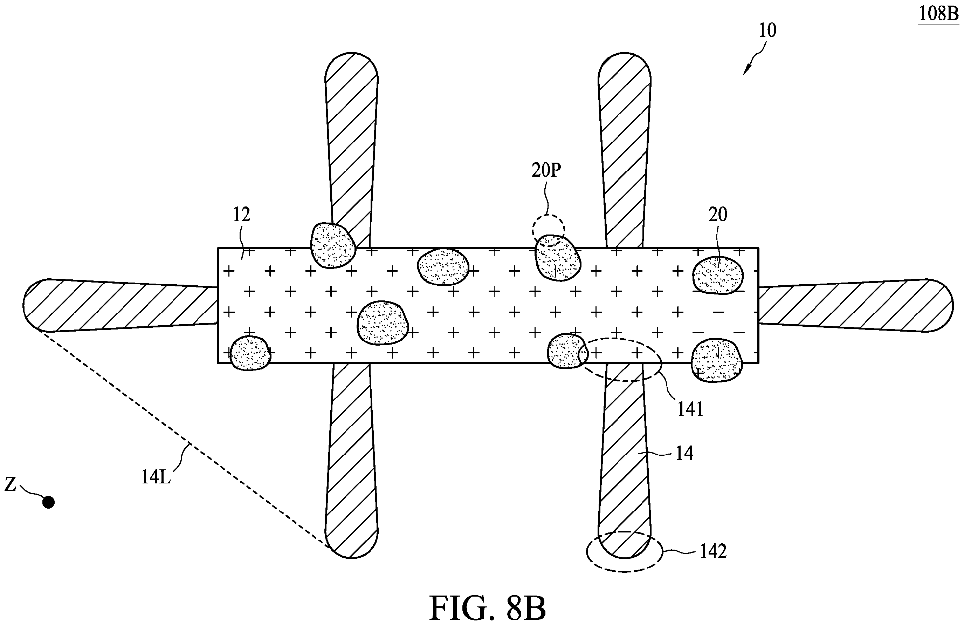

FIG. 8B is a cross-sectional view of a multi-lobed fiber according to some embodiments of the present disclosure. As shown in FIG. 8B, in contrast to the multi-lobed fiber 108A, the core portion 12 and the lobes 14 of the multi-lobed fiber 108B are formed from different materials.

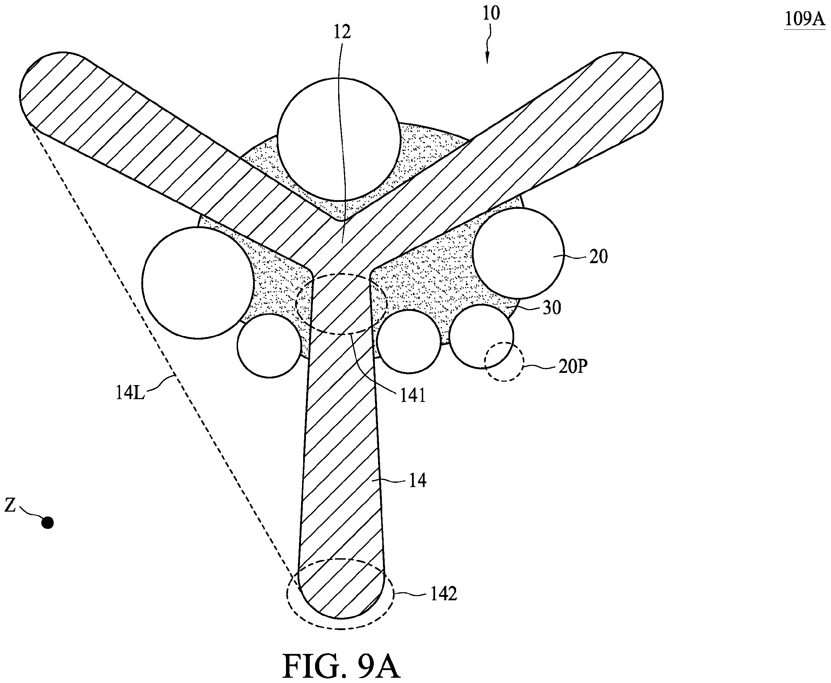

FIG. 9A is a cross-sectional view of a multi-lobed fiber according to some embodiments of the present disclosure. As shown in FIG. 9A, the multi-lobed fiber 109A further includes an adhesive layer 30 covering the core portion 12 and a portion of the lobes 14. The additives 20 are adhered to the core portion 12 of the fiber 10 by the adhesive layer 30. In some embodiments, a portion of at least some of the additives 20 protrudes from the adhesive layer 30. In some embodiments, the material of the adhesive layer 30 may include, but is not limited to, acrylic-based adhesives, polyurethane-based adhesives or the like. The fiber 10 of the multi-lobed fiber 109A includes three lobes 14. The core portion 12 and the lobes 14 of the multi-lobed fiber 109A are formed from the same material.

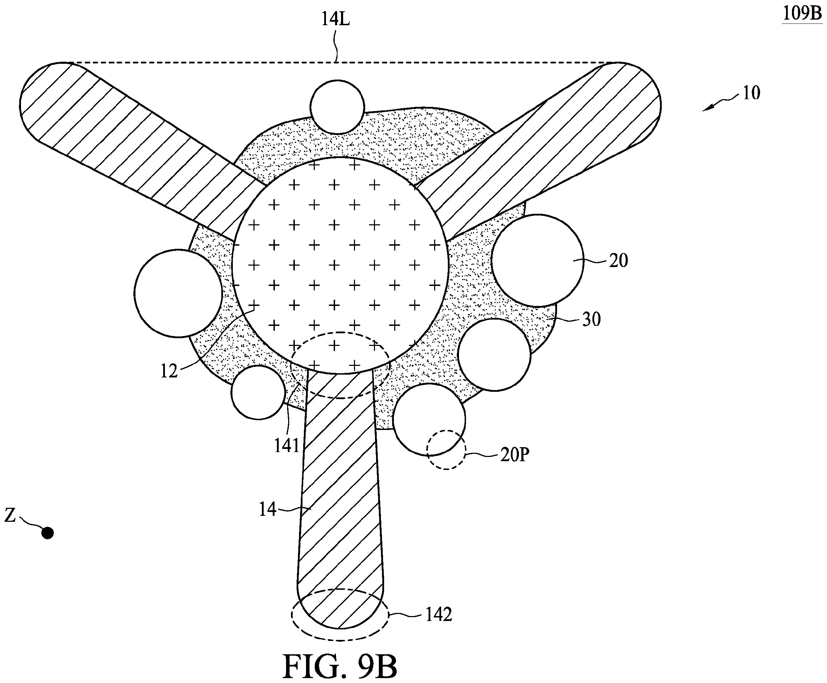

FIG. 9B is a cross-sectional view of a multi-lobed fiber according to some embodiments of the present disclosure. As shown in FIG. 9B, in contrast to the multi-lobed fiber 109A, the core portion 12 and the lobes 14 of the multi-lobed fiber 109B are formed from different materials.

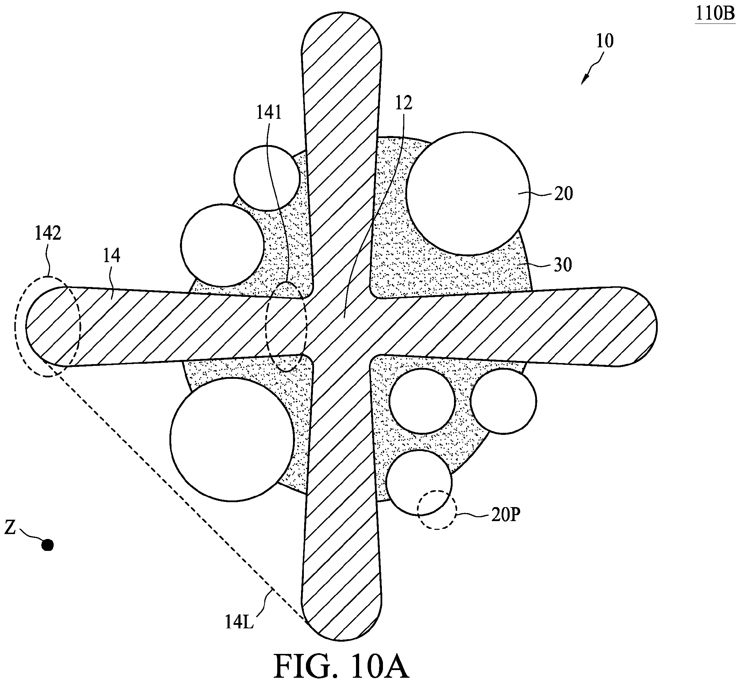

FIG. 10A is a cross-sectional view of a multi-lobed fiber according to some embodiments of the present disclosure. As shown in FIG. 10A, in contrast to the multi-lobed fiber 109A, the multi-lobed fiber 110A includes four lobes 14.

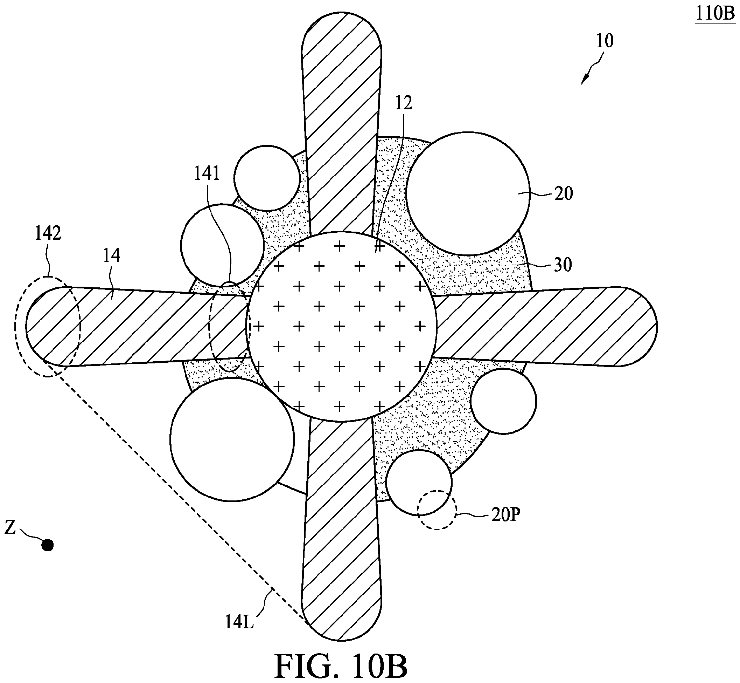

FIG. 10B is a cross-sectional view of a multi-lobed fiber according to some embodiments of the present disclosure. As shown in FIG. 10B, in contrast to the multi-lobed fiber 110A, the core portion 12 and the lobes 14 of the multi-lobed fiber 110B are formed from different materials.

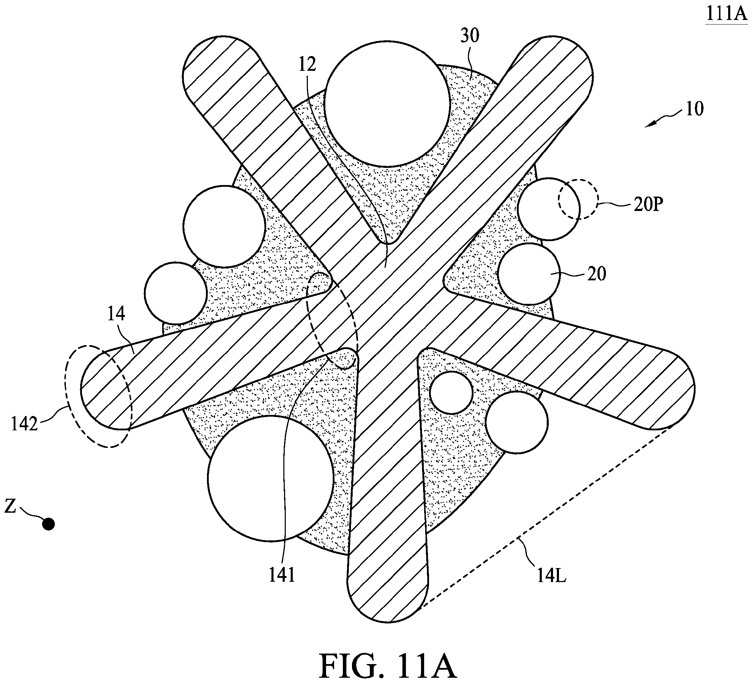

FIG. 11A is a cross-sectional view of a multi-lobed fiber according to some embodiments of the present disclosure. As shown in FIG. 11A, in contrast to the multi-lobed fiber 110A, the multi-lobed fiber 111A includes five lobes 14.

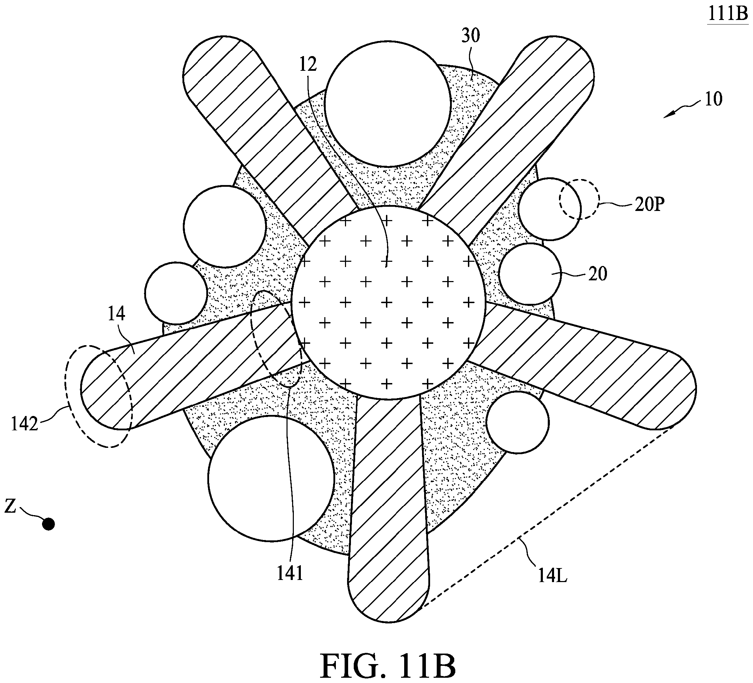

FIG. 11B is a cross-sectional view of a multi-lobed fiber according to some embodiments of the present disclosure. As shown in FIG. 11B, in contrast to the multi-lobed fiber 111A, the core portion 12 and the lobes 14 of the multi-lobed fiber 111B are formed from different materials.

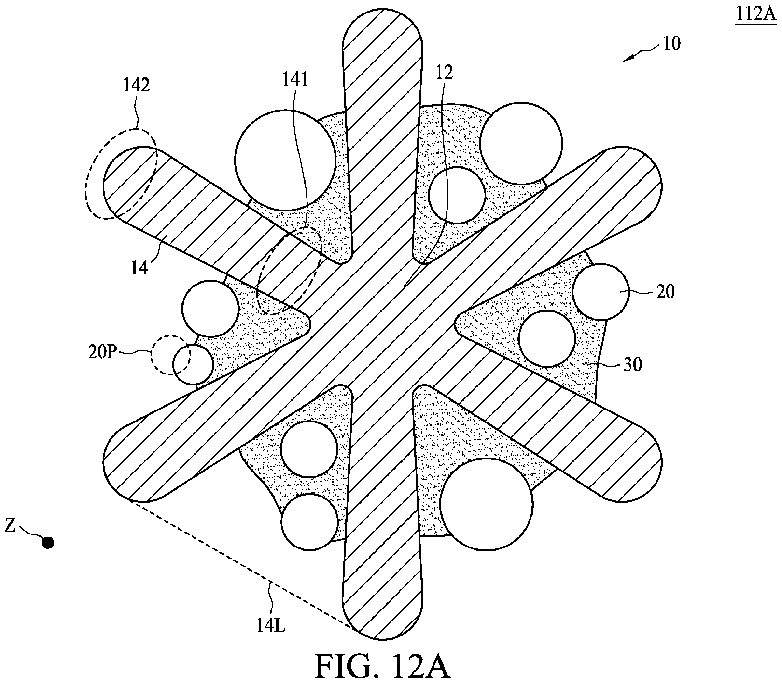

FIG. 12A is a cross-sectional view of a multi-lobed fiber according to some embodiments of the present disclosure. As shown in FIG. 12A, in contrast to the multi-lobed fiber 111A, the multi-lobed fiber 112A includes six lobes 14.

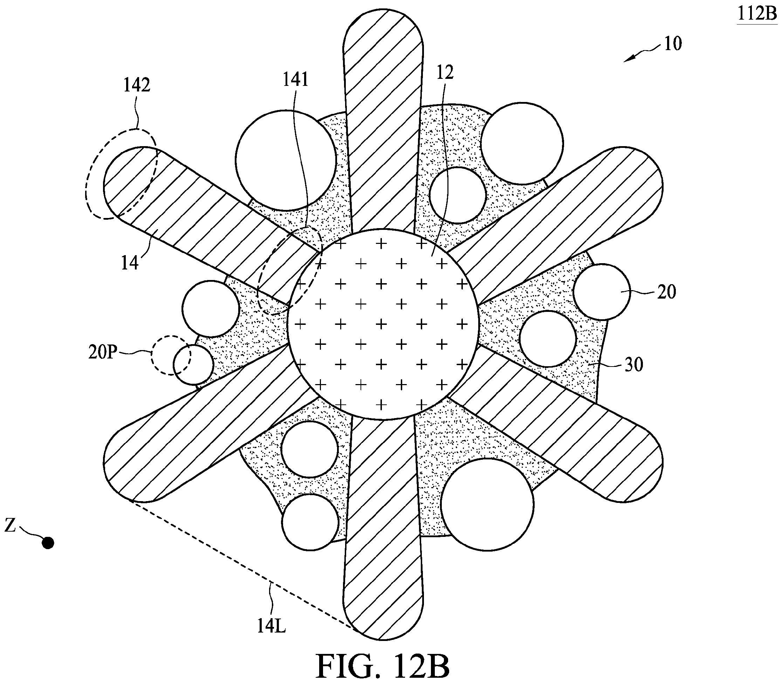

FIG. 12B is a cross-sectional view of a multi-lobed fiber according to some embodiments of the present disclosure. As shown in FIG. 12B, in contrast to the multi-lobed fiber 112A, the core portion 12 and the lobes 14 of the multi-lobed fiber 112B are formed from different materials.

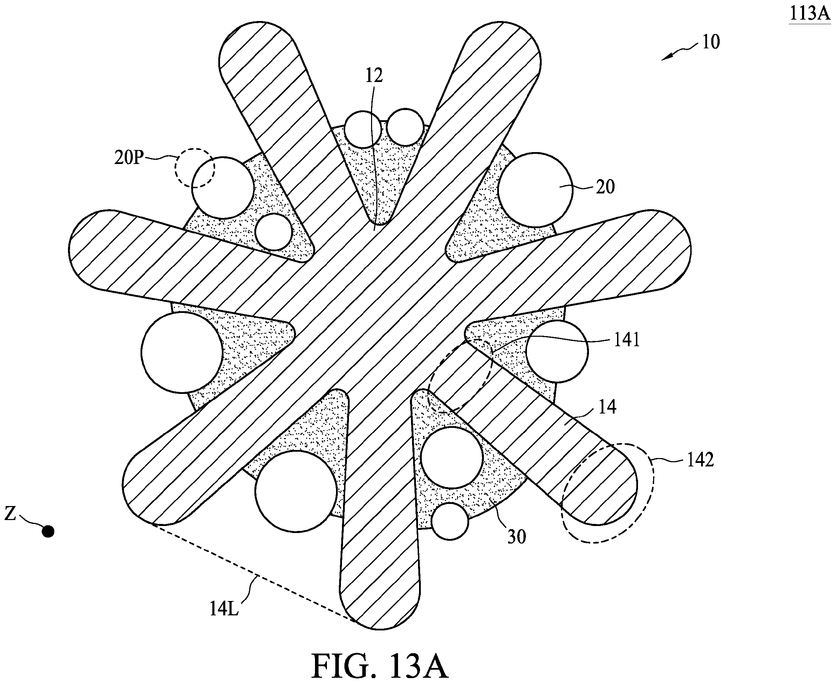

FIG. 13A is a cross-sectional view of a multi-lobed fiber according to some embodiments of the present disclosure. As shown in FIG. 13A, in contrast to the multi-lobed fiber 112A, the multi-lobed fiber 113A includes seven lobes 14.

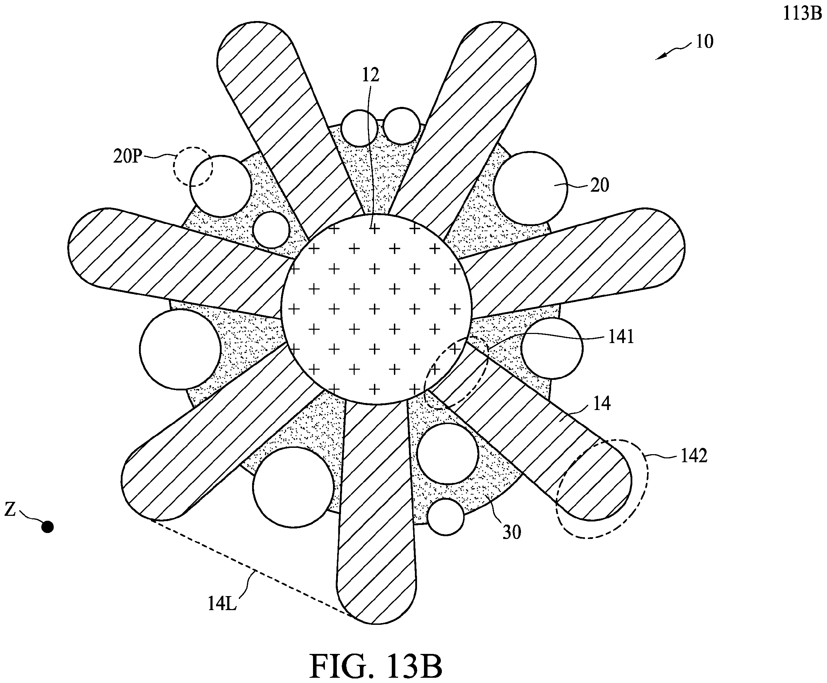

FIG. 13B is a cross-sectional view of a multi-lobed fiber according to some embodiments of the present disclosure. As shown in FIG. 13B, in contrast to the multi-lobed fiber 113A, the core portion 12 and the lobes 14 of the multi-lobed fiber 113B are formed from different materials.

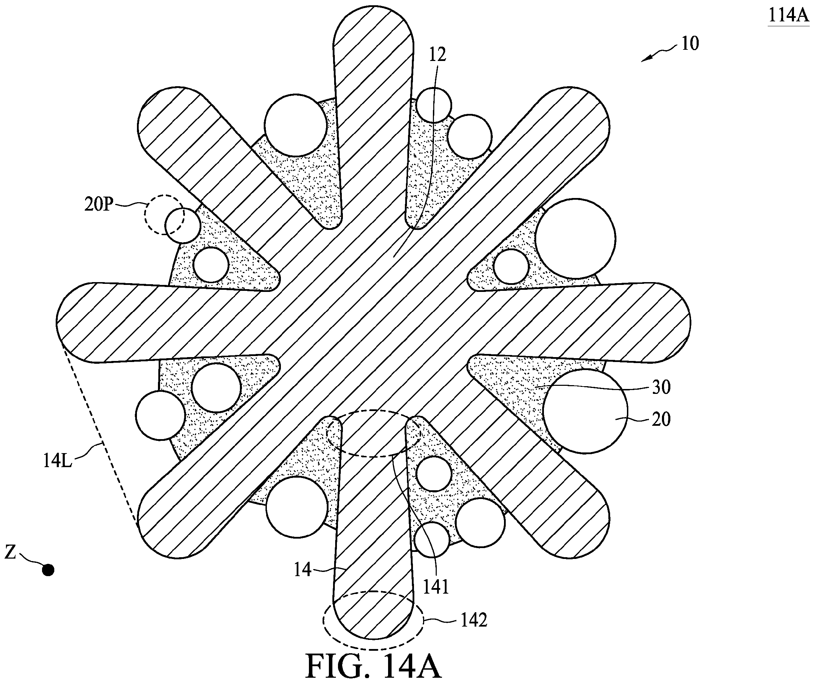

FIG. 14A is a cross-sectional view of a multi-lobed fiber according to some embodiments of the present disclosure. As shown in FIG. 14A, in contrast to the multi-lobed fiber 113A, the multi-lobed fiber 114A includes eight lobes 14.

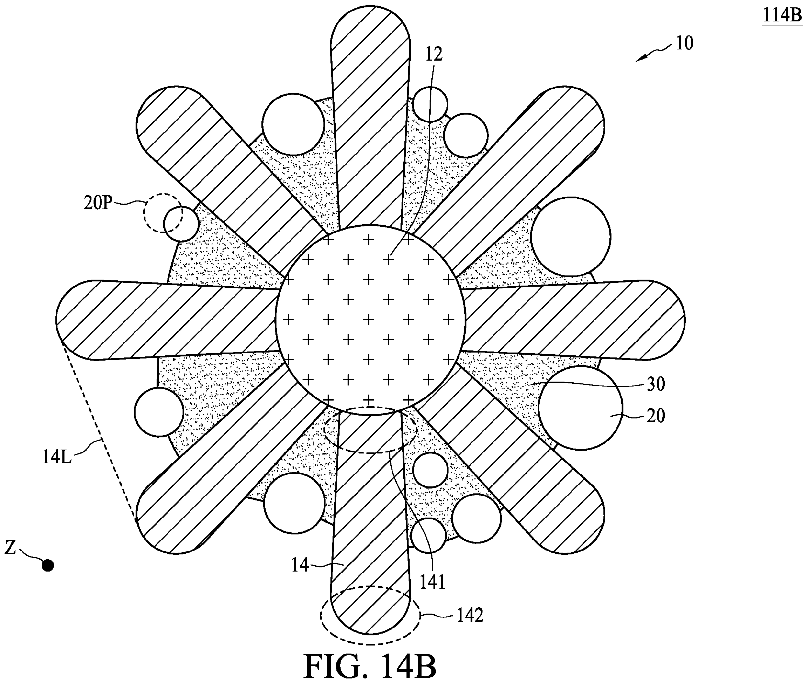

FIG. 14B is a cross-sectional view of a multi-lobed fiber according to some embodiments of the present disclosure. As shown in FIG. 14B, in contrast to the multi-lobed fiber 114A, the core portion 12 and the lobes 14 of the multi-lobed fiber 114B are formed from different materials.

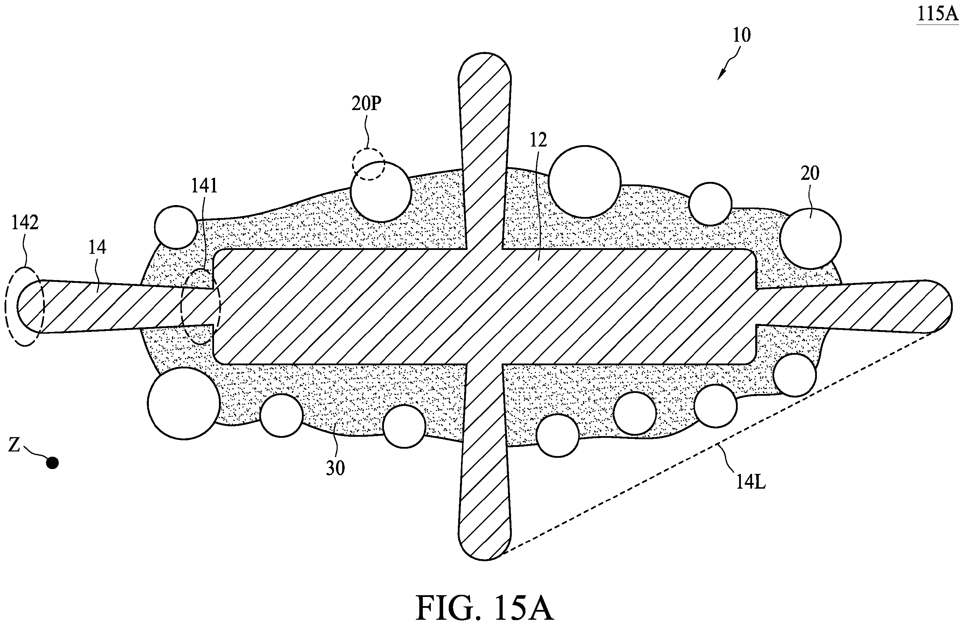

FIG. 15A is a cross-sectional view of a multi-lobed fiber according to some embodiments of the present disclosure. As shown in FIG. 15A, the core portion 12 of the fiber 10 of the multi-lobed fiber 115A has a polygonal shape such as a rectangular shape. The fiber 10 of the multi-lobed fiber 115A includes four lobes 14. The core portion 12 and the lobes 14 of the multi-lobed fiber 115A are formed from the same material. The multi-lobed fiber 115A further includes an adhesive layer 30 covering the core portion 12 and a portion of the lobes 14. The additives 20 are adhered to the core portion 12 of the fiber 10 by the adhesive layer 30.

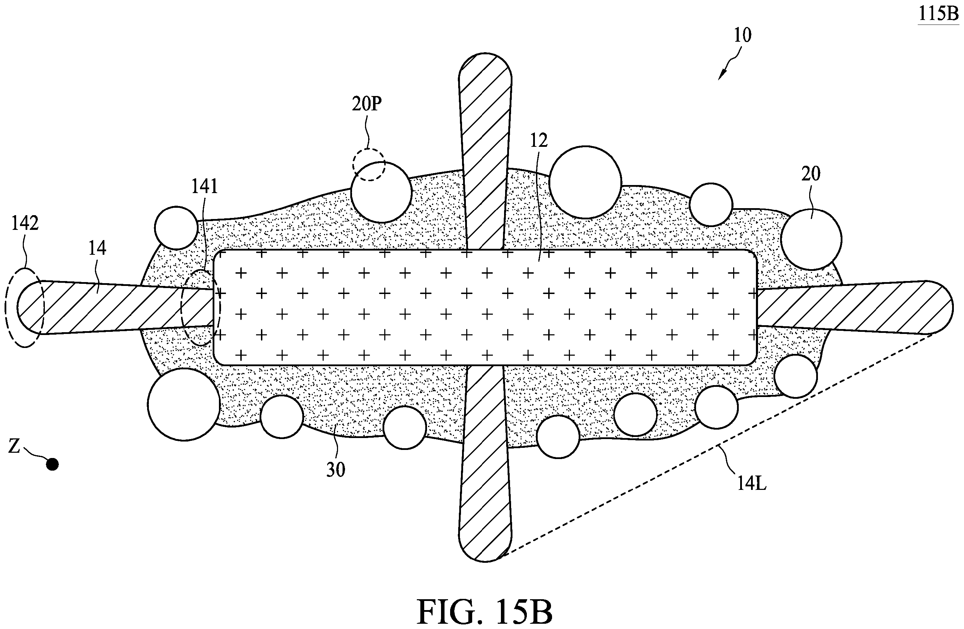

FIG. 15B is a cross-sectional view of a multi-lobed fiber according to some embodiments of the present disclosure. As shown in FIG. 15B, in contrast to the multi-lobed fiber 115A, the core portion 12 and the lobes 14 of the multi-lobed fiber 115B are formed from different materials.

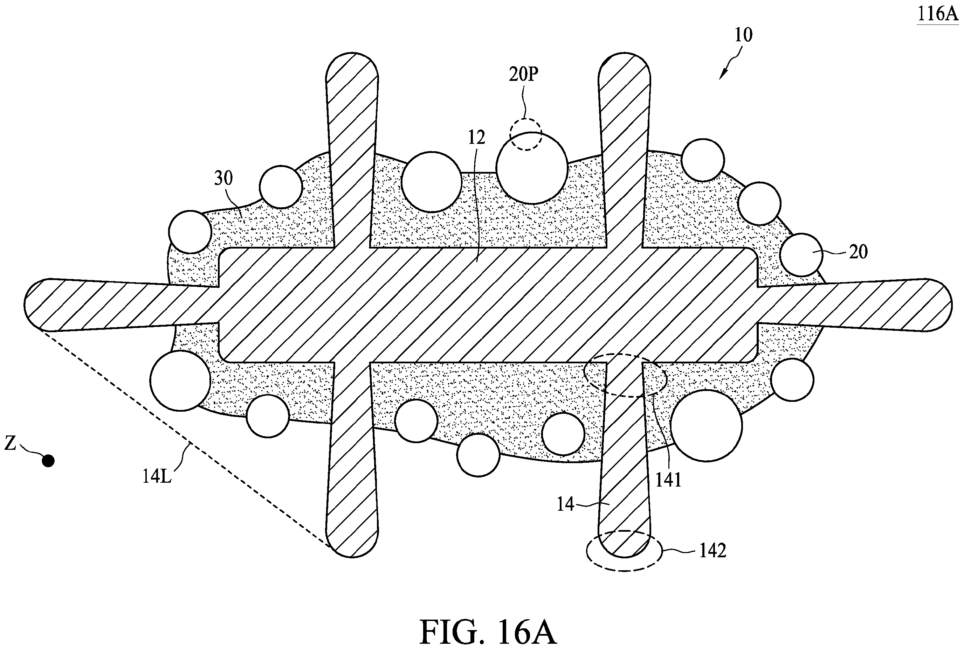

FIG. 16A is a cross-sectional view of a multi-lobed fiber according to some embodiments of the present disclosure. As shown in FIG. 16A, in contrast to the multi-lobed fiber 115A, the multi-lobed fiber 116A includes six lobes 14.

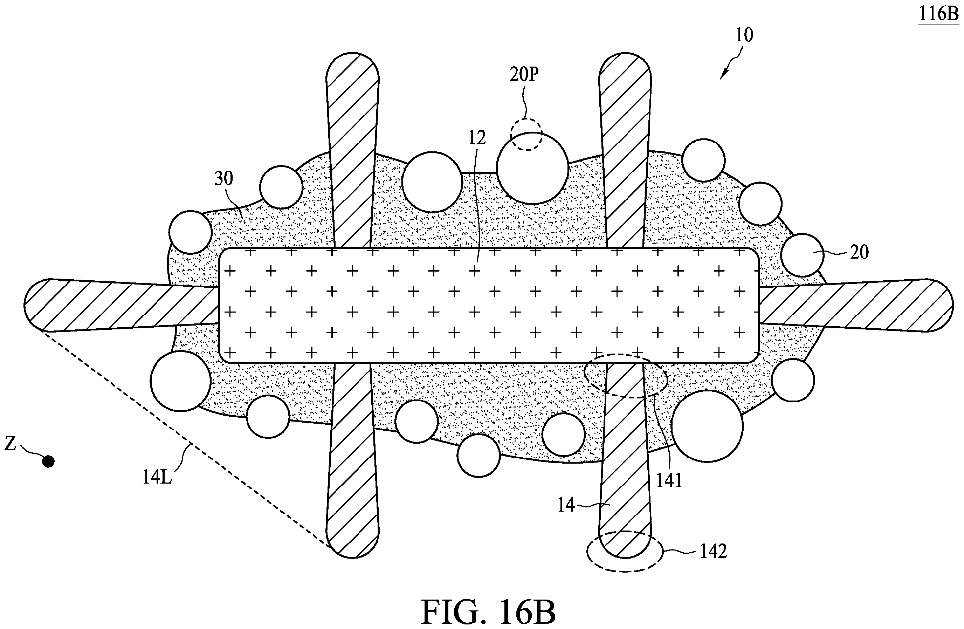

FIG. 16B is a cross-sectional view of a multi-lobed fiber according to some embodiments of the present disclosure. As shown in FIG. 16B, in contrast to the multi-lobed fiber 116A, the core portion 12 and the lobes 14 of the multi-lobed fiber 116B are formed from different materials.

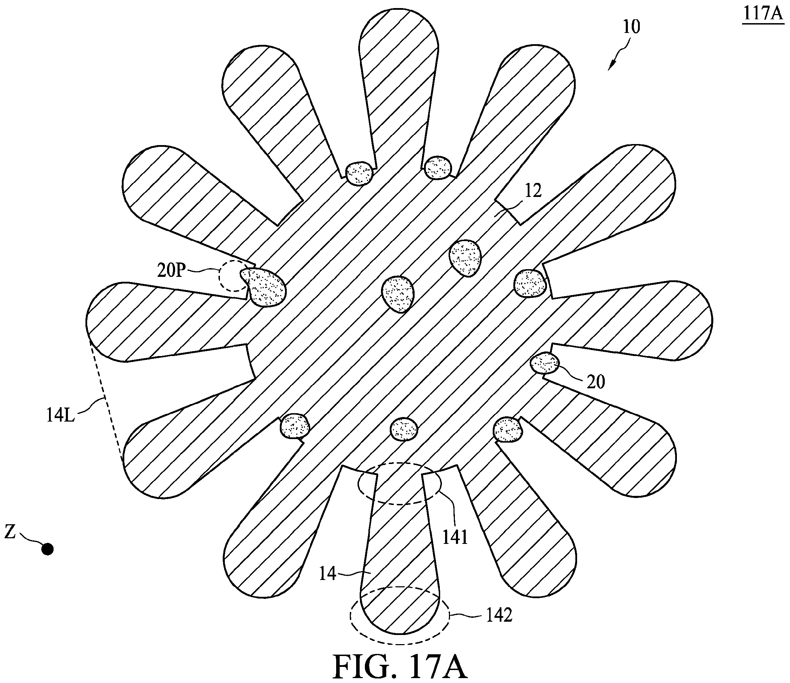

FIG. 17A is a cross-sectional view of a multi-lobed fiber according to some embodiments of the present disclosure. As shown in FIG. 17A, in contrast to the multi-lobed fiber 106A of FIG. 6A, the fiber 10 of the multi-lobed fiber 117A includes twelve lobes 14.

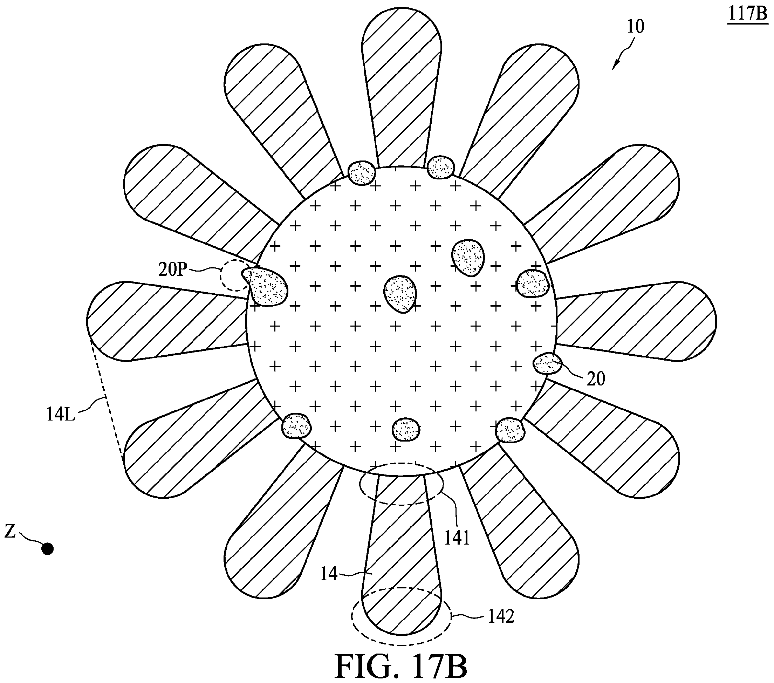

FIG. 17B is a cross-sectional view of a multi-lobed fiber according to some embodiments of the present disclosure. As shown in FIG. 17B, in contrast to the multi-lobed fiber 117A, the core portion 12 and the lobes 14 of the multi-lobed fiber 117B are formed from different materials.

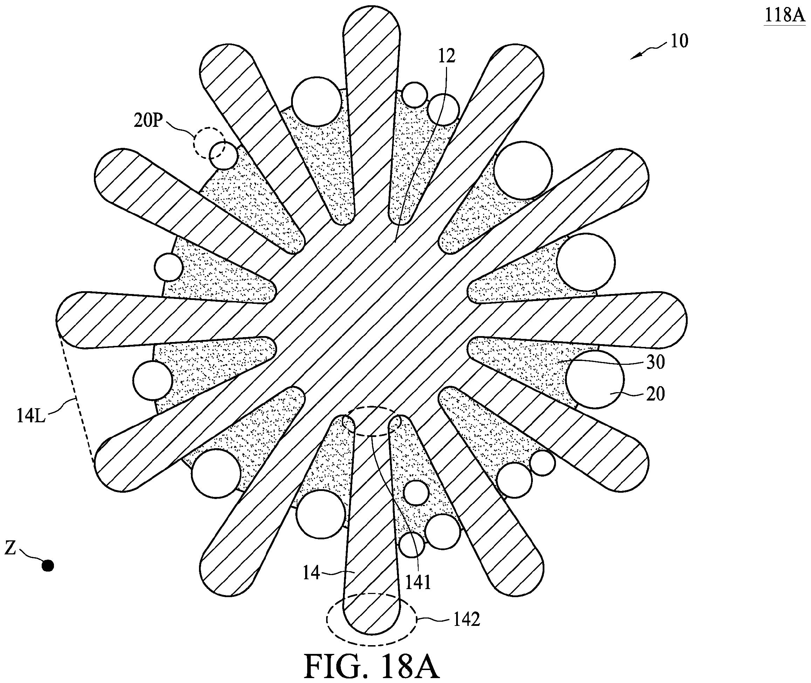

FIG. 18A is a cross-sectional view of a multi-lobed fiber according to some embodiments of the present disclosure. As shown in FIG. 18A, in contrast to the multi-lobed fiber 114A of FIG. 14A, the fiber 10 of the multi-lobed fiber 118A includes twelve lobes 14.

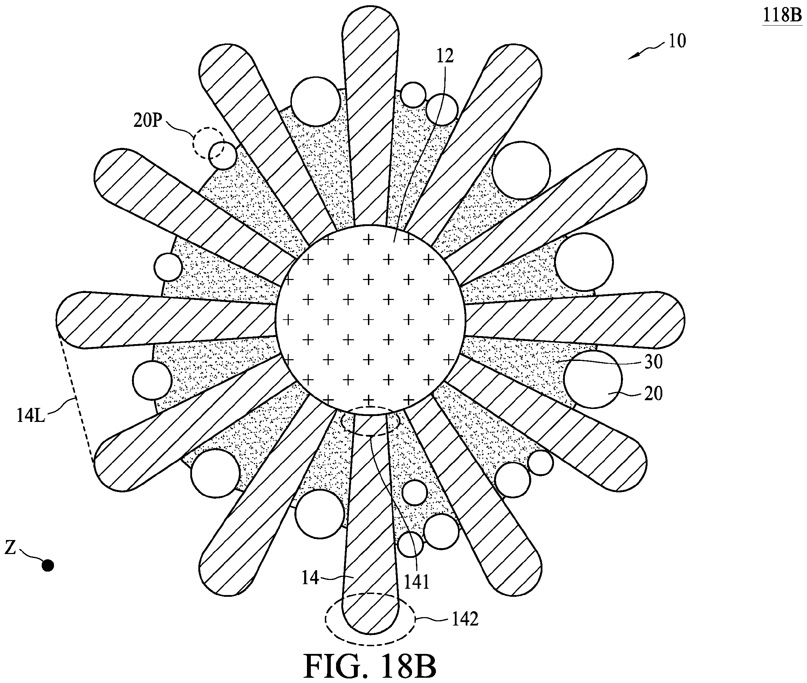

FIG. 18B is a cross-sectional view of a multi-lobed fiber according to some embodiments of the present disclosure. As shown in FIG. 18B, in contrast to the multi-lobed fiber 118A, the core portion 12 and the lobes 14 of the multi-lobed fiber 118B are formed from different materials.

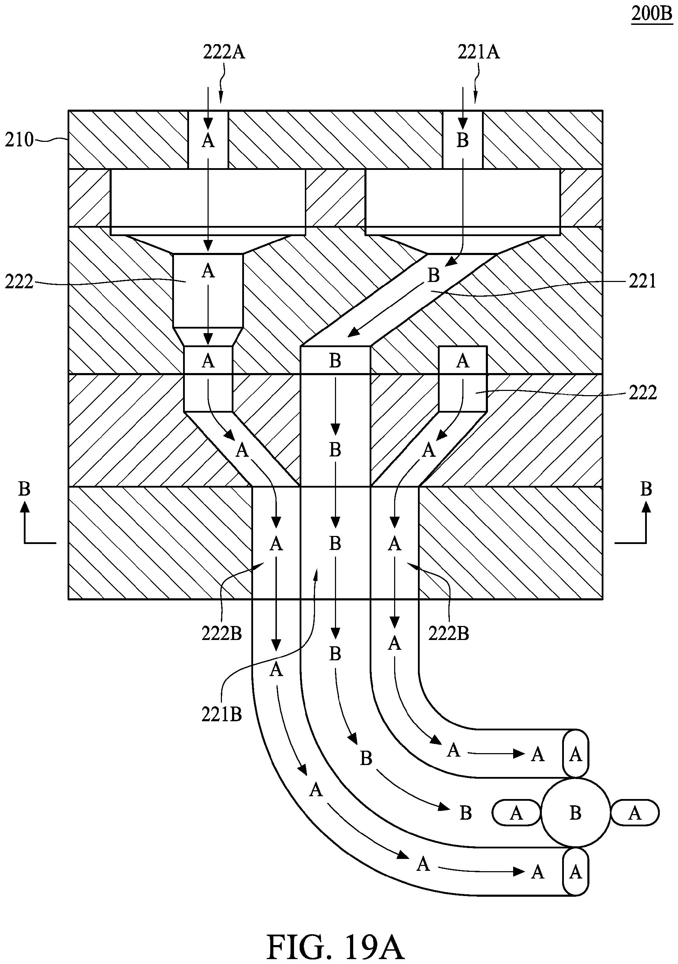

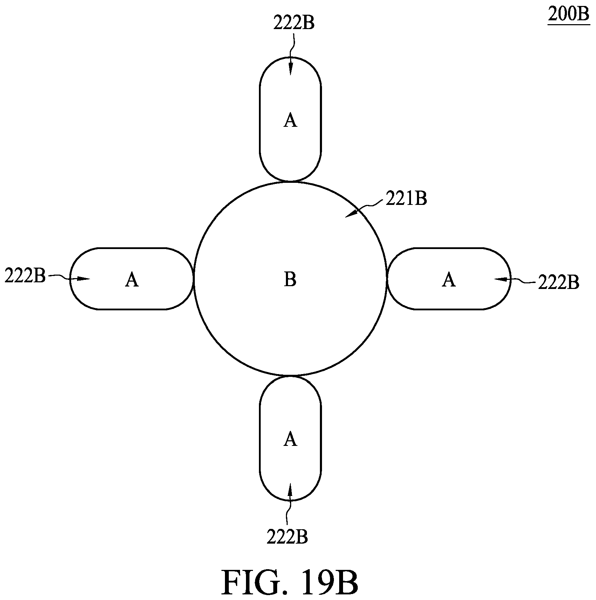

FIG. 19A is a schematic view of a spinneret assembly for manufacturing a multi-lobed fiber according to some embodiments of the present disclosure. FIG. 19B is a cross-sectional view of a spinneret assembly for manufacturing a multi-lobed fiber along a line B-B according to some embodiments of the present disclosure. As shown in FIG. 19A and FIG. 19B, the spinneret assembly 200B for manufacturing a multi-lobed fiber includes a mold 210, a first channel 221, and second channels 222. The first channel 221 and the second channels 222 extend through the mold 210. The first channel 221 includes a first inlet 221A configured to input a core material "B" and a first outlet 221B configured to output the core material "B" (material for manufacturing the core portion 12). Each of the second channels 222 includes a second inlet 222A configured to input a lobe material "A" (material for manufacturing lobe 14) and a second outlet 222B configured to output the lobe material "A." The second outlets 222B of the second channels 222 are disposed adjacent to the first outlet 221B of the first channel 221. In some embodiments, the spinneret assembly 200B includes a first channel 221 and four second channels 222. The number, shape and arrangement of the first channel 221 and second channels 222 may be configured to manufacture multi-lobed fibers according to different embodiments of the present disclosure. For example, the shape of the first channel 221 may be configured to have a circular shape, a rectangular shape or other shape. The number of the second channels 222 may be between 3 and 12, but is not limited thereto. In some embodiments, the second outlets 222B of the second channels 222 of the spinneret assembly 200B are connected to and in communication with the first outlet 221B of the first channel 221 such that the core material "B" and the lobe material "A" can be mixed at a bottom member before flowing out of the spinneret assembly 200B.

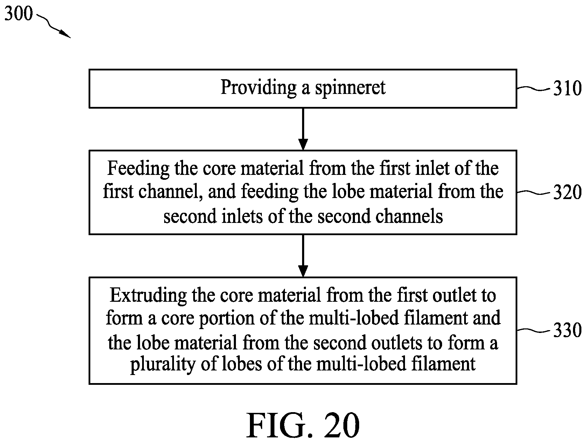

FIG. 20 is a flow chart illustrating a method of manufacturing a multi-lobed fiber according to various aspects of one or more embodiments of the present disclosure. The method 300 begins with step 310, in which a spinneret assembly 200B is provided as illustrated in FIGS. 19A and 19B. The method proceeds with step 220 in which a core material "B" is fed from the first inlet 221A of the first channel 221, and a lobe material "A" is fed from the second inlets 222A of the second channels 222, as illustrated in FIGS. 19A and 19B. The method proceeds with step 330 in which the core material "B" is extruded from the first outlet 221B to form a core portion of the multi-lobed fiber, and the lobe material "A" is extruded from the second outlets 222B to form the lobes of the multi-lobed fiber. The method 300 may further include forming additives 20 on the multi-lobed fiber. In some embodiments, the additives 20 (as illustrated in FIGS. 1A to 8B and FIGS. 17A-17B) may be added to the core material "B" before feeding the core material "B" to the first inlet 221A.

In some embodiments, after the step 330 of the method 300, an additional adhesive layer 30 may be further formed to cover the core portion 12, while exposing the lobs 14, and the additives 20 are then adhered to the core portion 12 via the adhesive layer 30, as illustrated in FIGS. 9A to 16B and FIGS. 18A-18B. In some embodiments, the adhesive 30 may be integrally formed with multi-lobed fiber in the step 330.

In some embodiments, the core portion 12 and the lobes 14 are integrally formed, i.e., the core portion 12 and the lobes 14 are formed substantially by the same fabrication process, rather than completing the core portion and then forming the lobes on the completed core portion. For example, the core portion 12 and the lobes 14 are integrally formed by processes as illustrated in FIGS. 19A-20.

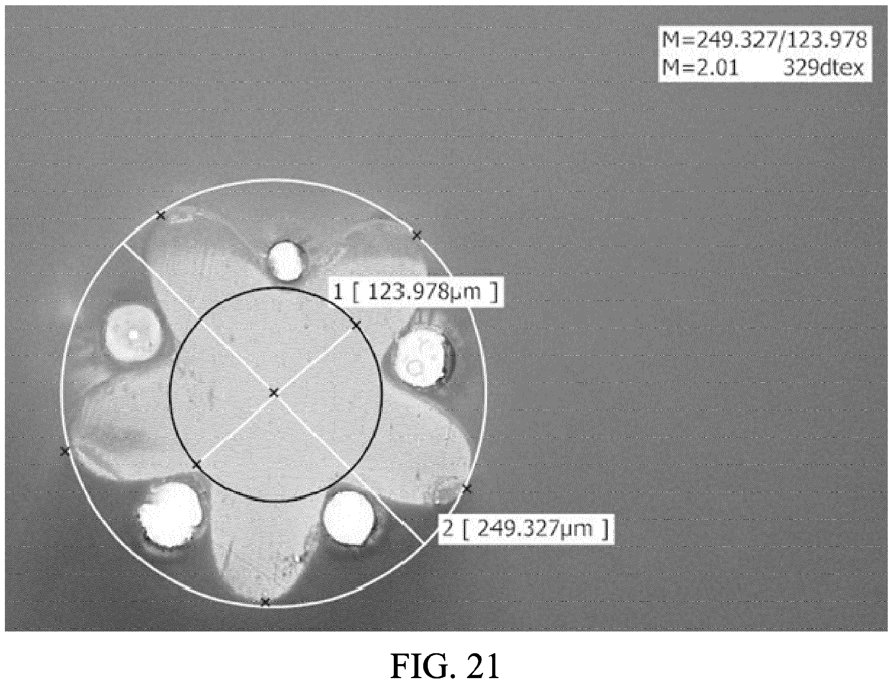

FIG. 21 is a photo showing a multi-lobed fiber according to one embodiment of the present disclosure. As shown in FIG. 21, a five-lobed fiber includes additives adhered to the core portion is illustrated as an example. In the present embodiment, the M ratio may be about 2.1, and the fineness may be about 329 dtex.

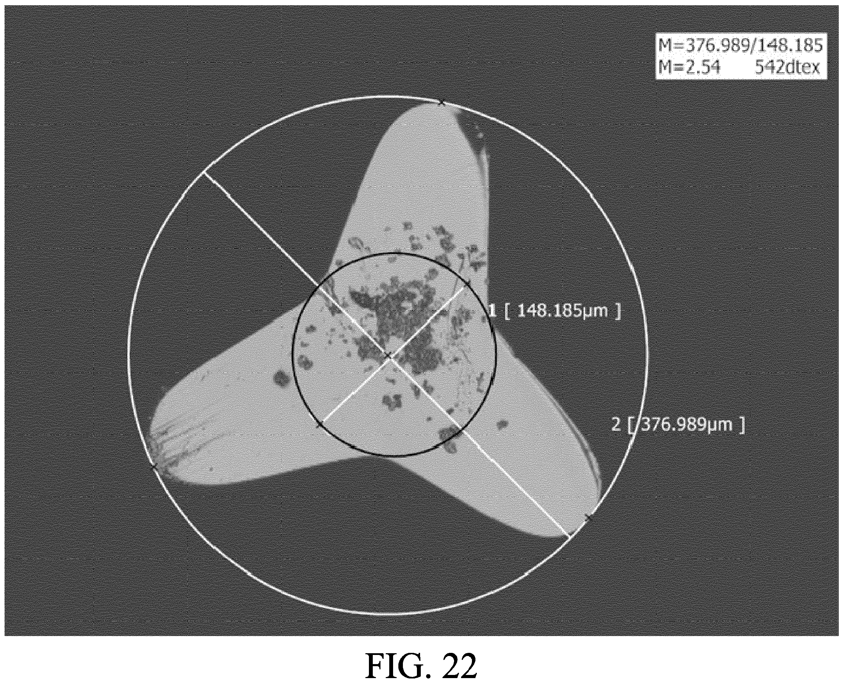

FIG. 22 is a photo showing a multi-lobed fiber according to another embodiment of the present disclosure. As shown in FIG. 22, a three-lobed fiber includes additives protruding from the core portion is illustrated as an example. In the present embodiment, the M ratio may be about 2.54, and the fineness may be about 542 dtex.

In conclusion, the multi-lobed fiber of the present disclosure includes additives closer to the core portion of the fiber than the outer ends of the lobes. Consequently, the outer end of the lobe reduces the possibility of contact between machine parts of a weaving machine or a knitting machine and the additives during subsequent weaving or knitting process. Furthermore, the lobes protruding out from the core portion can even prevent the additives from directly contacting or rubbing machine parts of a weaving machine or a knitting machine. Accordingly, possible damage to the machine parts caused by the additives can be avoided. Furthermore, the protruding outer end of the lobe protects the additives from breaking or falling apart.

Although the present disclosure and its advantages have been described in detail, it should be understood that various changes, substitutions and alterations can be made herein without departing from the scope of the disclosure as defined by the appended claims. For example, many of the processes discussed above can be implemented in different methodologies and replaced by other processes, or a combination thereof.

## Claims

1. A multi-lobed fiber, comprising:
a fiber having a cross-section comprising a core portion and a plurality of lobes, wherein each of the lobes includes an inner end connected to the core portion, and an outer end protruding from the core portion, and
a plurality of additives substantially disposed in the fiber, wherein each of the additives includes an outer point distal to the core portion, a portion of at least some of the additives is disposed in the core portion, the other portion of at least some of the additives protrudes from the core portion, and a distance from the outer point of the additive to the core portion is less than a distance from the outer end of the lobe to the core portion,
**characterized in that** the plurality of lobes are arranged radially with respect to the core portion.

2. The multi-lobed fiber of Claim 1, wherein the additives are disposed between two respective lobes of the plurality of lobes, and the distance from the outer point of the additive to the core portion is less than a distance from an imaginary connecting line extending between the outer ends of the two respective lobes of the plurality of lobes to the core portion.

3. The multi-lobed fiber of Claim 1, wherein a number of the lobes is between 3 and 12.

4. The multi-lobed fiber of Claim 1, wherein the core portion and the lobes are formed from a same material.

5. The multi-lobed fiber of Claim 1, wherein the core portion and the lobes are formed from different materials.

6. The multi-lobed fiber of Claim 1, wherein the core portion and the plurality of lobes extend along an axial direction, and the outer ends of the plurality of lobes are disconnected from one another.

7. The multi-lobed fiber of Claim 1, wherein the core portion and the plurality of lobes are integrally formed.

8. The multi-lobed fiber of Claim 1, wherein the additives comprise coloring additives, phosphorescent additives, reflecting additives, abrasive additives, fragile additives, or combinations thereof.

9. The multi-lobed fiber of Claim 1, wherein the core portion of the fiber has a substantially circular shape.

10. The multi-lobed fiber of Claim 1, wherein the core portion of the fiber has a polygonal shape.

## Patentansprüche

1. Mehrlappige Faser, umfassend:
eine Faser mit einem Querschnitt, der einen Kernteil und eine Vielzahl von Lappen umfasst, wobei jeder der Lappen ein inneres Ende umfasst, das mit dem Kernteil verbunden ist,
und ein äußeres Ende, das aus dem Kernteil herausragt, und
eine Vielzahl von Zusatzelementen, die im Wesentlichen in der Faser angeordnet sind, wobei jedes der Zusatzelemente einen äußeren Punkt distal zum Kernteil umfasst, ein Teil von mindestens einigen der Zusatzelemente im Kernteil angeordnet ist, der andere Teil von mindestens einigen der Zusatzelemente aus dem Kernteil hervorragt und ein Abstand vom äußeren Punkt des Zusatzelements vom Kernteil kleiner als ein Abstand vom äußeren Ende des Lappens bis zum Kernteil ist,
**dadurch gekennzeichnet, dass** die Mehrzahl der Lappen radial in Bezug auf den Kernteil angeordnet ist.

2. Mehrlappige Faser nach Anspruch 1, wobei die Zusatzelemente zwischen zwei jeweiligen Lappen von der Vielzahl von Lappen angeordnet sind und der Abstand vom äußeren Punkt des Zusatzelements vom Kernteil kleiner als ein Abstand von einer imaginären Verbindungslinie ist, die sich zwischen den äußeren Enden der beiden jeweiligen Lappen aus der Vielzahl von Lappen zum Kernteil erstreckt.

3. Mehrlappige Faser nach Anspruch 1, bei der die Anzahl der Lappen zwischen 3 und 12 liegt.

4. Mehrlappige Faser nach Anspruch 1, wobei der Kernteil und die Lappen aus dem gleichen Material geformt sind.

5. Mehrlappige Faser nach Anspruch 1, bei der der Kernteil und die Lappen aus verschiedenen Materialien geformt sind.

6. Mehrlappige Faser nach Anspruch 1, wobei sich der Kernteil und die Vielzahl der Lappen entlang einer axialen Richtung erstrecken und die äußeren Enden der Vielzahl der Lappen voneinander getrennt sind.

7. Mehrlappige Faser nach Anspruch 1, bei der der Kernteil und die Vielzahl der Lappen integral foliiert sind.

8. Mehrlappige Faser nach Anspruch 1, wobei die Zusatzelemente färbende Zusätze, phosphoreszierende Zusätze, reflektierende Zusätze, abrasive Zusätze, zerbrechliche Zusätze oder Kombinationen davon aufweisen.

9. Mehrlappige Faser nach Anspruch 1, wobei der Kernteil der Faser eine im Wesentlichen kreisrunde Form hat.

10. Mehrlappige Faser nach Anspruch 1, wobei der Kernteil der Faser eine polygonale Form hat.

## Revendications

1. Fibre à lobes multiples, comprenant :
une fibre ayant une section transversale comprenant une partie âme et une pluralité de lobes, dans lequel chacun des lobes inclut une extrémité intérieure raccordée à la partie âme, et une extrémité extérieure faisant saillie à partir de la partie âme, et
une pluralité d'additifs sensiblement disposés dans la fibre, dans lequel chacun des additifs inclut un point extérieur distal à la partie âme, une partie d'au moins certains des additifs est disposée dans la partie âme, l'autre partie d'au moins certains des additifs fait saillie à partir de la partie âme, et une distance du point extérieur de l'additif à la partie âme est inférieure à une distance de l'extrémité extérieure du lobe à la partie âme,
**caractérisé en ce que** la pluralité de lobes sont agencés radialement par rapport à la partie âme.

2. Fibre à lobes multiples selon la revendication 1, dans lequel les additifs sont disposés entre deux lobes respectifs de la pluralité de lobes, et la distance du point extérieur de l'additif à la partie âme est inférieure à une distance d'une ligne de liaison imaginaire s'étendant entre les extrémités extérieures des deux lobes respectifs de la pluralité de lobes à la partie âme.

3. Fibre à lobes multiples selon la revendication 1, dans lequel un nombre des lobes est entre 3 et 12.

4. Fibre à lobes multiples selon la revendication 1, dans lequel la partie âme et les lobes sont formés à partir d'un même matériau.

5. Fibre à lobes multiples selon la revendication 1, dans lequel la partie âme et les lobes sont formés de matériaux différents.

6. Fibre à lobes multiples selon la revendication 1, dans lequel la partie âme et la pluralité de lobes s'étendent le long d'une direction axiale, et les extrémités extérieures de la pluralité de lobes sont disjointes les unes des autres.

7. Fibre à lobes multiples selon la revendication 1, dans lequel la partie âme et la pluralité de lobes sont formés de façon monobloc.

8. Fibre à lobes multiples selon la revendication 1, dans lequel les additifs comprennent des additifs colorants, des additifs phosphorescents, des additifs réfléchissants, des additifs abrasifs, des additifs fragiles, ou des combinaisons de ceux-ci.

9. Fibre à lobes multiples selon la revendication 1, dans lequel la partie âme de la fibre a une forme sensiblement circulaire.

10. Fibre à lobes multiples selon la revendication 1, dans lequel la partie âme de la fibre a une forme polygonale.
